# EUROPEAN PATENT APPLICATION

(11) **EP 1 641 261 A2**
(43) Date of publication of application: **29.03.2006**
(21) Application number: 05021214.1
(22) Date of filing: 28.09.2005
(51) Int. Cl.: H04N 7/00, H04L 29/08

(54) **Method and means for interaction of viewers with television programmes via cellular mobile terminals**

(30) Priority: 28.09.2004 US 613237 P; 11.04.2005 US 669875 P
(71) Applicant: T.P.G. Podium Israel Ltd., 69710 Tel-Aviv (IL)
(72) Inventor: Leitersdorf, Amir, 69086 Tel-Aviv (IL); Leitersdorf, Yoav A., New York, NY 10025 (US); Aitken, Paul, OX2 7QF Oxford (GB)
(74) Representative: Becker Kurig Straus

(57) **Abstract**

Apparatus for interactive broadcasting comprises: an in step device for determining predetermined times in a broadcast relevant to user interaction; a content insertion device for inserting interactivity content for sending over a network to users for interaction at the predetermined times; and an embedding unit for embedding timing control into the interactive content to ensure that the interactive content is displayed to the users at the predetermined times. The apparatus is useful for providing timely user interaction even via the cellular network. Further refinements include traffic spreading at the application layer, and the use of SMS to provide a user with the URL for initial logging on.

## Description

### FIELD AND BACKGROUND OF THE INVENTION

The present invention relates to an audience participation method and apparatus and, more particularly, but not exclusively to audience participation method and apparatus via cellular and other networked devices.

Audience participation in broadcast programmes is not new. News reporters frequently conduct spontaneous interviews in the street with passing members of the public, and broadcast show hosts often take a microphone into the audience in order to ask questions and poll different points of view. The ability to feed telephone calls from the general public into the broadcast programme chain was a significant step forward in relation to audience participation. More recently, the ability for programme producers to broadcast polls and invite the audience to vote and answer questions via phone, IVR, personal computer, CTV remote+set top box or text from a mobile phone has increased the choices of those designing new audience-participation formats for broadcast programmes.

It is especially desirable to provide user interaction via mobile devices as these are widespread. Regular terrestrial viewers do not have a set top box and cable and satellite viewers who do have a set top box may find it complicated to use. Furthermore, satellite users have to connect their set top boxes to the telephone lines in order to receive interactive services.

Present systems using mobile devices have notable disadvantages. The ability to provide suitable interactive pages to the user depends on the ability of the user to enter a URL, which most users cannot do on a mobile telephone. Content has to be synchronized with the broadcast which is not easy. Furthermore, the very fact of synchronization with the broadcast makes it likely that large numbers of user requests would be received at the same time at a supporting content server. This leads to overload and the likelihood that the server will crash. This is particularly an issue with mobile devices since the mobile network has limited bandwidth, particularly in respect of data content, and the servers for mobile content are generally of limited capacity.

There is thus a widely recognized need for, and it would be highly advantageous to have, a system for interaction with a broadcast devoid of the above limitations.

### SUMMARY OF THE INVENTION

According to one aspect of the present invention there is provided a method for connecting a user of a mobile unit of a cellular communication service to a server, the method comprising:
receiving a cellular connection to a telephone number associated with a server;
sending a Uniform Resource Locator (URL) to said mobile unit;
receiving a request including said URL from said user via said mobile unit; and
connecting said mobile unit to said server via said cellular communication service.

According to another aspect of the present invention there is provided a method of interaction between a user of a cellular mobile unit and a broadcast program, the method comprising:
sending a group of interaction displays to said mobile unit, wherein each of said interaction displays is assigned a time-of-display in accordance with which said respective interaction display is displayed to said user;
wherein said time-of-display is synchronized with at least one of said broadcast program and a response of said user.

According to another aspect of the present invention there is provided a method of interaction between a user of a cellular mobile unit and a broadcast program, the method comprising:
receiving a group of interaction displays at said mobile unit, each of said interaction displays having a time-of-display assigned thereto; and
displaying said interaction displays according to their respective times-of-display;
wherein said time-of-display is synchronized with at least one of said broadcast program and a response of said user.

According to another aspect of the present invention there is provided a method for interacting with a plurality of users of a respective plurality of cellular communications mobile units, the method comprising:
assigning delay parameters to respective mobile units, said delay parameters defining a delay prior to transmitting said user-response to a server;
wherein values of said delay parameters are distributed over a time period to obtain a substantially constant rate of transmissions of responses from said plurality of mobile units.

According to another aspect of the present invention there is provided a method for interacting with a user of a cellular communications mobile unit, the method comprising:
receiving, at a server, from said mobile unit, a user-response sent at a time of response;
measuring a time-of-reception of said user-response;
sending, from said server to said mobile unit, a first request at a first time;
receiving, at said server, from said mobile unit, an automatic response to said first request at a second time;
measuring, at said server a round-trip-time between said first time and said second time; and
calculating said time-of-response by subtracting half of said round-trip-time from said second time.

According to another aspect of the present invention there is provided a method for retaining a communication channel with a mobile telephony device, comprising:
sending to the mobile device at least one interaction display;
embedding a request having a predetermined delay within said interaction display;
at expiry of said predetermined delay sending said request to said server, thereby to retain said communication channel.

According to another aspect of the present invention there is provided a server for connecting a user of a cellular communications mobile unit thereto via a cellular network, the server comprising:
a call identifier operative to receiving a call from said mobile unit to a telephone number; and
a URL transmitter, operative to send a Uniform Resource Locator (URL) to said mobile unit, said URL being associated with predetermined content, thereby enabling said user to select said URL and to connect to said content.
A broadcasting interaction system for allowing interaction with a broadcast via a cellular device, the system comprising:
a content source for providing to requesting users a group of interaction displays, and
a synchronizer for providing each interaction display with a preconfigured time-of-display, wherein said time-of-display is for synchronization with said broadcast program.
A grading system for grading participants engaging in a multi-user interaction between users of cellular mobile units and a broadcast, said grading program comprising:
a calculator unit operative to calculate, for each said user, an average of a plurality of measurements of time-of-response of said user to said broadcasting program; and
a grading unit operative to compare respective averages of said time-of-response, therewith to grade said participants.

According to another aspect of the present invention there is provided a synchronized content distribution apparatus for distributing content to a plurality of users in accordance with external time constraints, the content being within an application; the system comprising:
a content distributor of said application for receiving requests from users and distributing content in response thereto; and
a request spreading unit for sending to each user a respective delay parameter for use within said application, to define for each user a delay in sending a respective request, respective delays being varied, thereby to ensure that receipt of requests at said content distributor is staggered in time.

According to another aspect of the present invention there is provided a apparatus for interactive broadcasting comprising:
an in step device for determining predetermined times in a broadcast relevant to user interaction;
a content insertion device for inserting interactivity content for sending over a network to users for interaction at said predetermined times;
and an embedding unit for embedding timing control into said interactive content to ensure that said interactive content is displayed to said users at said predetermined times.

Unless otherwise defined, all technical and scientific terms used herein have the same meaning as commonly understood by one of ordinary skill in the art to which this invention belongs. The materials, methods, and examples provided herein are illustrative only and not intended to be limiting.

Implementation of the method and system of the present invention involves performing or completing certain selected tasks or steps manually, automatically, or a combination thereof. Moreover, according to actual instrumentation and equipment of preferred embodiments of the method and system of the present invention, several selected steps could be implemented by hardware or by software on any operating system of any firmware or a combination thereof. For example, as hardware, selected steps of the invention could be implemented as a chip or a circuit. As software, selected steps of the invention could be implemented as a plurality of software instructions being executed by a computer using any suitable operating system. In any case, selected steps of the method and system of the invention could be described as being performed by a data processor, such as a computing platform for executing a plurality of instructions.

### BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in order to provide what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:

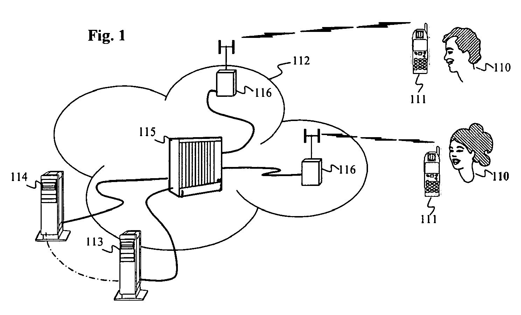

Fig. 1 is a simplified illustration of a cellular network equipped with an audience participation controller, according to a preferred embodiment of the present invention.

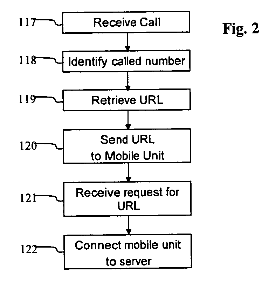

Fig. 2 is a simplified block diagram of a process flow that connects a cellular mobile unit to a network server according to a preferred embodiment of the present invention.

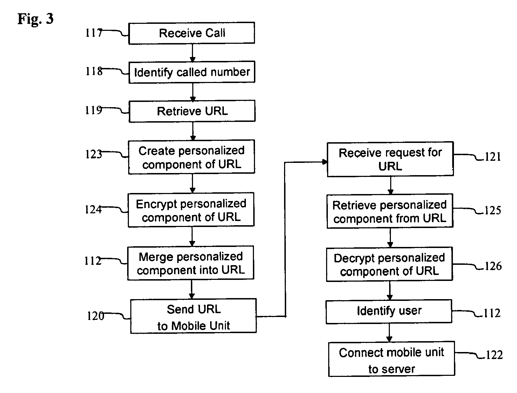

Fig. 3 is a simplified block diagram of a flow of another process that connects a cellular mobile unit to a network server according to another preferred embodiment of the present invention.

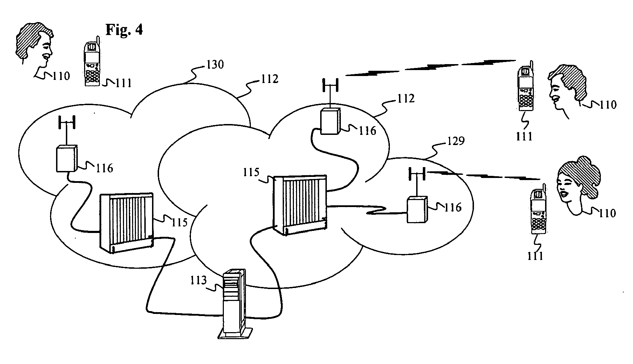

Fig. 4 is a simplified illustration of a plurality of cellular networks served by the audience participation controller, according to a preferred embodiment of the present invention.

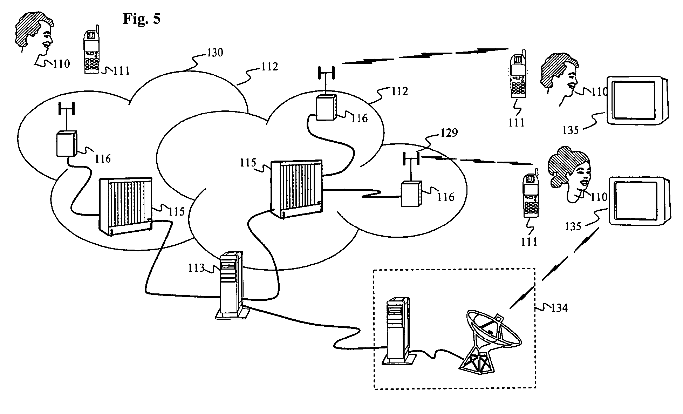

Fig. 5 is a simplified illustration of the audience participation controller 113 connecting between a broadcasting service and a plurality of users of cellular mobile units, according to a preferred embodiment of the present invention.

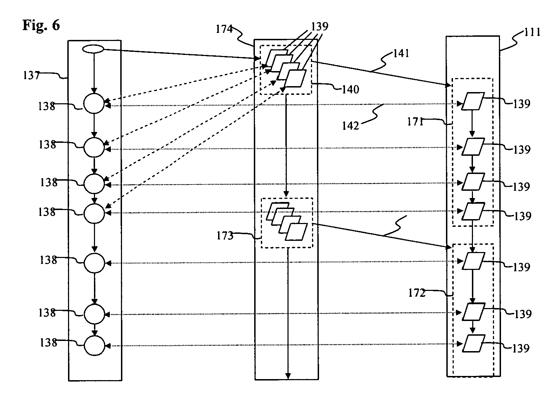

Fig. 6 is a simplified drawing of a synchronization procedure providing synchronization between a broadcast program and a cellular mobile unit, according to a preferred embodiment of the present invention.

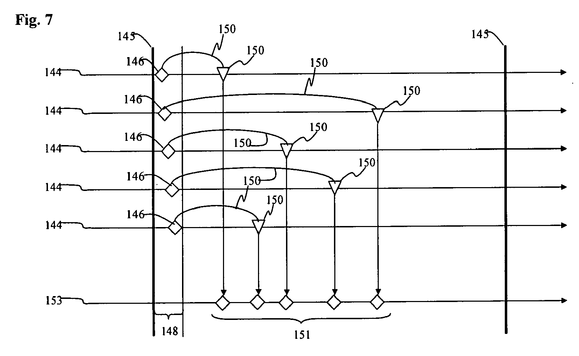

Fig. 7 is a simplified diagram of a procedure for spreading user responses over time to avoid congestion, according to a preferred embodiment of the present invention.

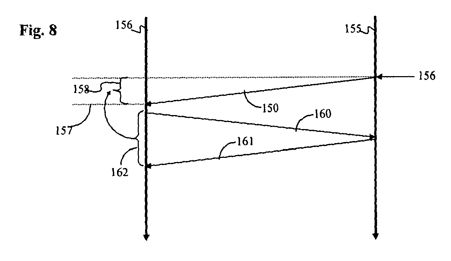

Fig. 8 is a simplified diagram of a latency measuring process according to a preferred embodiment of the present invention.

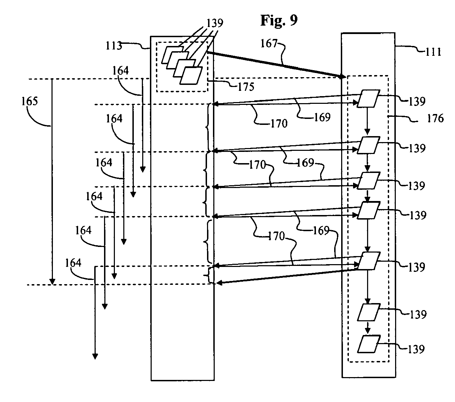

Fig. 9 is a simplified drawing of a disconnection avoidance process according to a preferred embodiment of the present invention.

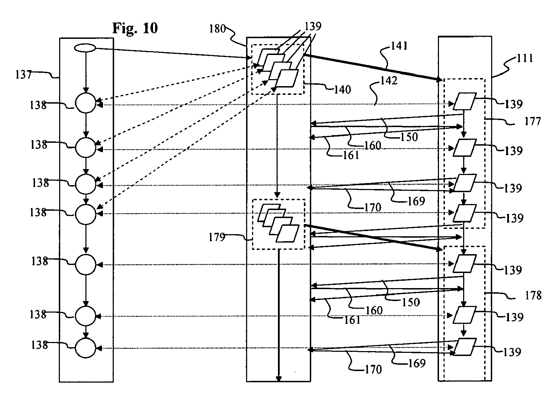

Fig. 10 is a simplified diagram of a process combining the processes of Figs 16, 18 and 19 according to a preferred embodiment of the present invention.
Fig. 11 is a simplified block diagram of the controller of Fig 5 shown in greater detail.
Fig. 12 is a block diagram showing the controller of Fig. 11 in greater detail.
Fig. 13 is a block diagram of the controller of Fig. 11, showing software aspects thereof according to a preferred embodiment of the present invention.
Fig. 14 is a chart showing response loading on a network to typical interactive television-type data.
Fig. 15 is a cumulative chart of viewers having responded based on the data of Fig., 14.
Fig. 16 is a chart showing how dynamic voting data can be presented to users in real time according to a preferred embodiment of the present invention.
Figs. 17, 18 and 19 are time charts showing exchange of signals between a server and a mobile device against information presented on a broadcast system, according to preferred embodiments of the present invention;
Figs. 20 and 21 illustrate a logging in process for users to the Interactive television system of preferred embodiments of the present invention;
Figs. 22 and 23 illustrate the messaging route via the mobile telephony network according to preferred embodiments of the present invention;
Fig. 24 is a simplified diagram illustrating the main latency components measured by embodiments of the present invention;
Fig. 25 is a time chart showing exchange of signals between a server and 5 a mobile device against information presented on a broadcast system, according to a preferred embodiment of the present invention;
Fig. 26 is a comparative diagram showing unmediated and spread traffic flow using interactive TV systems; and
Fig. 27 illustrates a transcoder for modifying content for interactive television according to embodiments of the present invention for different makes and models of mobile device.

### DESCRIPTION OF THE PREFERRED EMBODIMENTS

The present embodiments comprise an apparatus and a method for interaction with a broadcast, preferably using cellular devices over a cellular network. Further embodiments comprise providing traffic spreading at the level of an application.

The principles and operation of an apparatus and method according to the present invention may be better understood with reference to the drawings and accompanying description.

Before explaining at least one embodiment of the invention in detail, it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

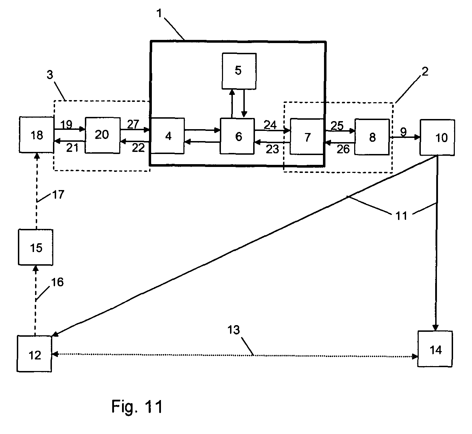

Reference is now made to Fig. 11, which is a simplified illustration of a cellular network equipped with an audience participation controller, according to a preferred embodiment of the present invention.

As shown in Fig. 11, a plurality of users 110, operating a respective plurality of cellular mobile units 111, are connected via a cellular network 112 to an audience participation controller 113 and to an information server 114. For simplicity of Fig. 11, the cellular network 1112 consists of a network switch 115 and a plurality of network of base stations 116. The audience participation controller 1113 and the information server 1114 are any type of network servers, preferably Internet servers or any other HTTP server. Further preferably, the audience participation controller 1113 and the information server 114 can be wireless applications protocol (WAP) servers. It is appreciated that the audience participation controller 113 and the information server 114 can be embodied within two separate servers or within a single server. It is also appreciated that the information server 114 can be any number of information servers 114. It is further appreciated that the cellular mobile unit 111 is any device capable of communicating via a cellular network, such as a cellular telephone, a cellular personal digital assistant (PDA), etc.

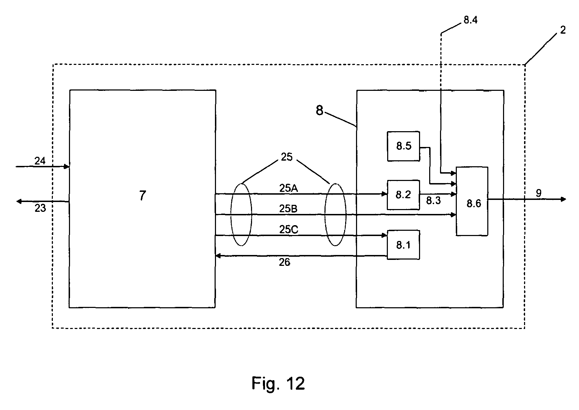

Reference is now made to Fig. 12, which is a simplified block diagram of a process flow that connects a cellular mobile unit to a network server according to a preferred embodiment of the present invention.

As shown in Fig. 12, the process of connecting a cellular mobile unit to a network server is preferably performed by the audience participation controller (element 113 of Fig. 11, not shown in Fig. 12).

The process starts in step 17, when the cellular mobile unit (element 111 of Fig. 11, not shown in Fig. 12) calls a telephone number, preferably a cellular telephone number. The call to the telephone number is preferably performed by sending a short message service (SMS) message to the telephone number or by dialing the telephone number.

In step 18 the cellular switch (element 115 of Fig. 11, not shown in Fig. 12) identifies the called number and informs the audience participation controller 113. It is appreciated that the call is optionally completed to the audience participation controller 113, preferably by accepting the SMS message, or, alternatively, by answering the telephone call. Alternatively the call is not completed, but the audience participation controller 113 receives the call details, typically comprising the dialed telephone number and the caller's telephone number.

In step 19 the audience participation controller 113 retrieves a Uniform Resource Locator (URL) associated with the dialed telephone number. Preferably the URL is retrieved from a database hosted by the audience participation controller 113.

In step 120 the audience participation controller 113 sends the URL to the mobile unit 1111 that started the procedure. Preferably the audience participation controller 113 sends the URL to the mobile unit 111 embedded within a message of a message service, also known as wireless application protocol push (WAP push). Alternatively the URL is embedded in a message of a short message service (SMS). Further alternatively, the URL is embedded in an iMod email message.

After receiving the URL, the mobile unit 111 issues a request for content having the address defined by the URL, preferably following a user selection, but alternatively automatically. In step 121 the audience participation controller 1113 receives the request for the URL content from the mobile unit 1111 and in step 122 the audience participation controller 1113 redirects the request according to the URL. Alternatively the mobile unit 111 is connected directly to the server hosting the URL. Further alternatively and preferably the audience participation controller 113 hosts the URL

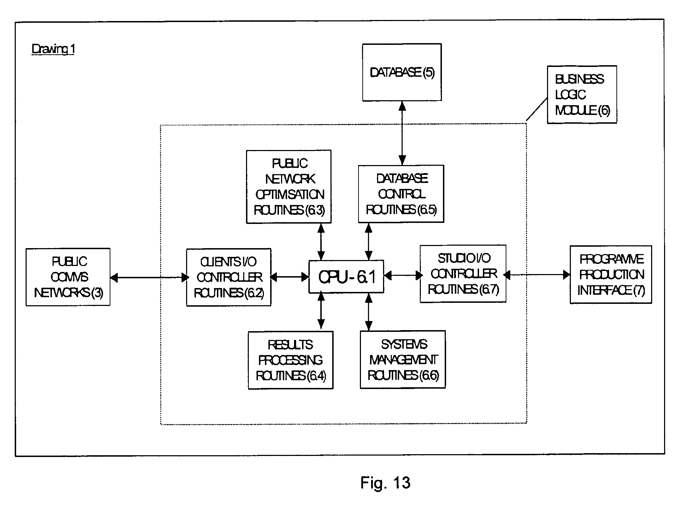

Reference is now made to Fig. 13, which is a simplified block diagram of a flow of another process that connects a cellular mobile unit to a network server according to another preferred embodiment of the present invention.

As shown in Fig. 13, the process of Fig. 13 is similar to the process of Fig. 12 and steps that perform the same functions are enumerated by the same numerals. The process of Fig. 13 is preferably performed by the audience participation controller 113.

In the process described with reference to Fig. 13, after the URL is retrieved (step 19) the process continues to step 123 and creates a personalized URL, preferably by generating a unique identifier of a web page or folder and adding it to a valid address. Preferably the additional identifier does not necessarily point to an existing web page or folder. Preferably the valid address to which the additional identifier is added is the URL of the audience participation controller 113. Preferably the valid address to which the additional identifier is added is the URL of a valid web page or folder hosted by the audience participation controller 113 and the identifier is added as a dummy folder.

To reduce the probability of a user imitating another user, or spoofing the communication, or otherwise guessing the personalized URL the unique identifier is generated within a very large field of numbers. For example, by generating a random number between 1 and 2¹²⁸. Alternatively the unique identifier may be obtained by performing hashing on an enumerator, preferably by encrypting a user enumerator.

In step 124 the process optionally encrypts the unique part of the URL. Preferably encryption uses the Data Encryption Standard (DES), further preferably using triple DES. Preferably encrypting is only of the unique identifier, but additional data may be encrypted as well if desired. The result of the encryption is preferably modified to comply with rules pertaining to URL format, for example by converting to base 64.

In step 1120 the URL is sent to the mobile unit and in step 1121 a request for the resource defined by the URL is received from the mobile unit, preferably following a manual user request.

In the following step 125 the audience participation controller 113 retrieves the personalized component from the URL and in step 126 the audience participation controller 1113 verifies that the user identifier is valid, preferably by decrypting the retrieved personalized component. Then, in step 127, the audience participation controller 113 identifies the user and finally, in step 1122, the audience participation controller 113 connects the mobile unit 111 to the required resource.

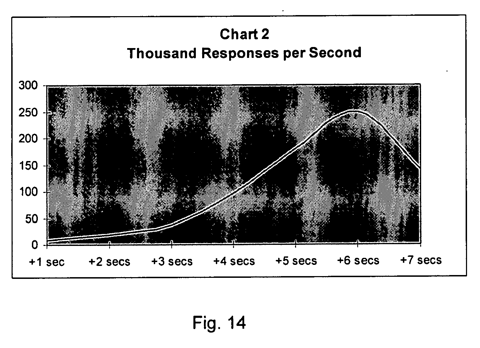

Reference is now made to Fig. 14, which is a simplified illustration of a plurality of cellular networks served by the audience participation controller 113, according to a preferred embodiment of the present invention.

As shown in Fig. 14, two cellular networks 128, one cellular network referenced by numerator 129 and the other by numerator 130, serve a plurality of cellular mobile units. Both cellular networks 131 are connected to the audience participation controller 1113 and preferably also to an information server 132 (not shown).

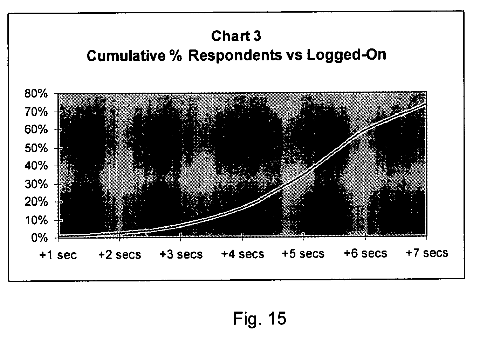

Reference is now made to Fig. 15, which is a simplified illustration of the audience participation controller 113 connecting between a broadcasting service and a plurality of users of cellular mobile units, according to a preferred embodiment of the present invention.

As shown in Fig. 15, the audience participation controller 113 is connected to a plurality of cellular networks 133 and to a broadcasting service 134, preferably a television broadcasting service broadcasting television programs to television sets 135 viewed by the users 110 of mobile units 1111. Thus, the audience participation controller 113 enables viewers of a television program broadcast by broadcasting service 136 to participate is the television program via their mobile units.

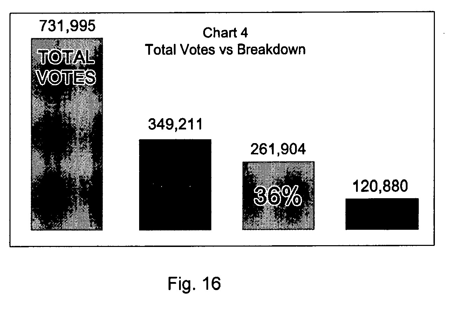

Reference is now made to Fig. 16, which is a simplified drawing of a synchronization procedure providing synchronization between a broadcast program and a cellular mobile unit, according to a preferred embodiment of the present invention.

In Fig. 16 a broadcast program 137 contains several events 138 in which spectators are asked to participate. The spectators of the broadcast program 1137 are requested to respond to some content displayed on a display of their respective cellular mobile units 1111. Preferably, the content presented on the display requires the user to make a selection by pressing one of the keys of the mobile unit 111. The mobile unit 111 then sends the user response to a server of the broadcasting service via a cellular data communication facility. It is therefore desirable that all mobile units 111 present the content at the same time.

The purpose of the process described with reference to Fig. 16 is to synchronize between the broadcast program and the content display so that the content is displayed at the same time on all mobile units 111 in synchronization with the respective event 138.

As shown in Fig. 16, for each event 1138 there is an interaction display 139 that contains the content to be displayed on the display of the mobile units 111 in synchronization with the respective event 1138. Several interaction displays 1139 are grouped together in a group of interaction displays 140. The audience participation controller 113 sends (step 141) the group of interaction displays 1140 to all the mobile units 111 that have previously connected to a respective server. Preferably the server is the audience participation controller 113. Preferably the users performed the connection using the procedure described with reference to Figs. 12 and 13. Preferably, each of the interaction displays 1139 contains a time-of-display in which the mobile unit has to display the interaction displays 1139 to the user 110. This time-of-display is synchronized (142) with the respective event 1138. Preferably, when needed, the interaction displays 1139 are grouped in several groups 140 and the audience participation controller 113 sends (step 143) successive groups 1140 to the mobile units 111

Preferably the group of interaction displays is embodied using a deck-of-cards method of Wireless Application Protocol (WAP).

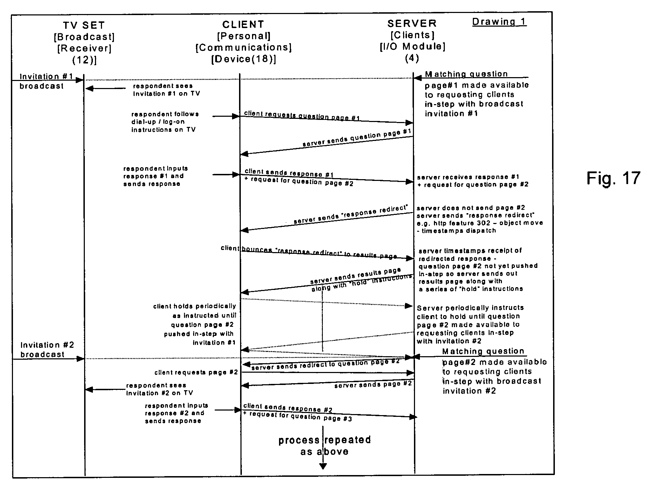

Reference is now made to Fig. 17, which is a simplified diagram of a procedure for spreading user responses over time to avoid congestion, according to a preferred embodiment of the present invention.

Fig. 17 shows several timelines 144 for respective mobile units 111. At time 145 the mobile units 111 display content to which the users 1110 provide user responses 146. These user responses initiate transmissions bearing the respective user responses. These transmissions are sent by the mobile units 111 to a server, preferably the audience participation controller 113. It is appreciated that at least some of the user responses 1146 occur within a short time period 147. Thus, it is necessary to spread the transmissions in time to avoid congestion over the cellular network. Such congestion may cause unknown delays between the time the user provided the response and the time the transmission bearing the response is received by the server or even the loss of some of the transmissions. Therefore every mobile unit is assigned a time-delay 148 to create a delay between the time the user provides the response to the mobile unit 1111 and the time the mobile unit 111 sends the transmission 1149. Therefore the transmissions 1149 are spread over a time period 150 that is longer than time period 1147, thus avoiding congestion. The delay 1149 is known to the server, preferably the audience participation controller 113, that computes the time in which the user provided the user response by subtracting the delay 1149 from the time of reception 151, as shown on the server timeline 152. It is appreciated that the longest delay 1148 should not cause a transmission 1149 past the next time 1145 when the mobile units 111 display content to which the users 110 provide user responses.

It is appreciated that in the situation where an audience participation controller 113 connects users 110 using respective mobile units 1111, via several cellular networks 112, the audience participation controller 1113 maintains such a procedure for spreading user responses over time for each of the cellular networks 1112.

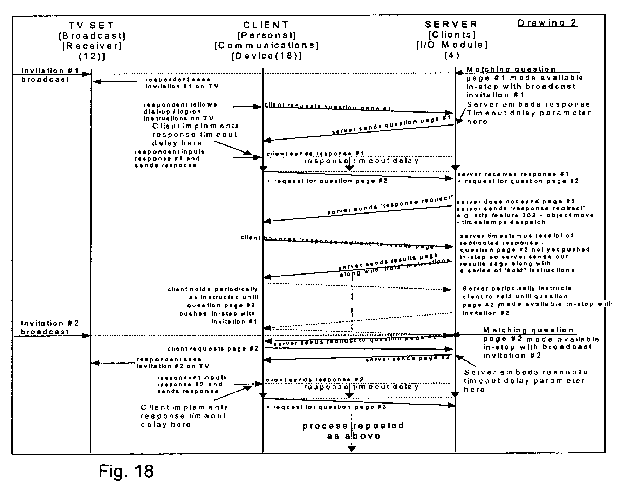

Reference is now made to Fig. 18, which is a simplified diagram of a latency measuring process according to a preferred embodiment of the present invention.

Fig. 18 shows a timeline 153 of a mobile unit 111 and a timeline 154 of a server, preferably the audience participation controller 113. The mobile unit 111 sends, at time 155, a transmission, such as transmission 1149 of Fig. 17, bearing a user-response. Due to latency 156, typically caused by the cellular network 112 of Figs. 11, 14 and 15, the transmission is received by the server at time 157. Shortly after time 1155, the server sends to the mobile unit 111 a request-for-automatic-response 158. The mobile unit 111 responds immediately with an automatic-response 159. The server then measures the round-trip-time 160. The server subtracts a part of the round-trip-time 1160 from the time-of-reception 1155 to obtain the time of user-response 1154. The part of the round-trip-time to be subtracted from the time-of-reception is predetermined, preferably according to statistical measurements.

Preferably the request-for-automatic-response 161 is performed by the server sending an HTTP code such as Status Code 302 to the mobile unit 1111.

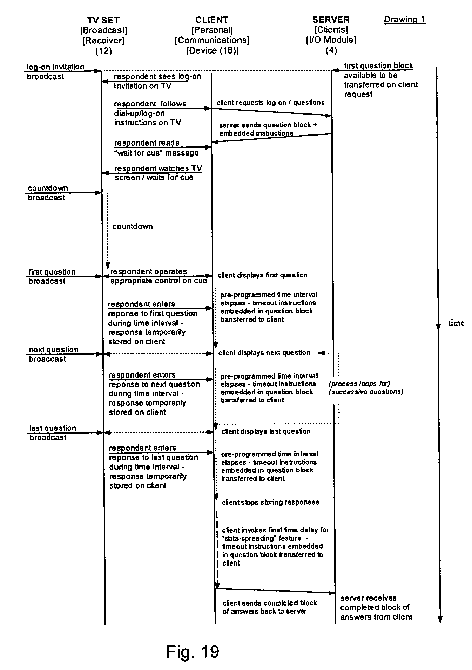

Reference is now made to Fig. 19, which is a simplified drawing of a disconnection avoidance process according to a preferred embodiment of the present invention.

Often, the mobile device, or possibly the cellular network 112, disconnects a session with a mobile unit 111 if there is no traffic with the mobile unit 111 within a time-out period 162. When a mobile unit 111 is used to provide interaction with a broadcast program, preferably as described with reference to Fig. 16, it is possible that the broadcast program requires interaction after a period of time 163, which is longer than the time-out period 164. The purpose of the disconnection avoidance procedure is to initiate automatic traffic from the mobile unit 111, preferably to the audience participation controller 113, at a rate that eliminates such premature disconnection.

As shown in Fig. 19, the audience participation controller 113 sends (165) a group 1140 of interaction displays 1139, such as described with reference to Fig. 16. At least some, preferably all the interaction displays 1139 contain wireless application protocol (WAP) Markup Language (WML) procedure (WML page). A request for a WML script (WMLS) is preferably embedded within each WML page. Therefore, when the mobile unit 111 invokes such an interaction display 1139 and processes the WML page, the mobile unit 111 sends (166) the request for WMLS to the audience participation controller 113, that sends back (167) a short and simple WMLS that preserves the visual display on the mobile unit 111. As shown in Fig. 19, the interaction displays 1139 are set to be invoked, and create traffic, at a rate that eliminates premature disconnection of the session.

It is appreciated that the server, preferably the audience participation controller 113, is operative to execute any combination of the processes described with reference to Figs. 16, 17, 18 and 19 to enable viewers of broadcast television programs to participate in the program by using their mobile units, to synchronize between the display on the mobile units and events presented via the television set, to obtain the correct time in which the user 110 provided a user-response to the mobile unit 1111, and to eliminate premature disconnection of the session with the mobile unit.

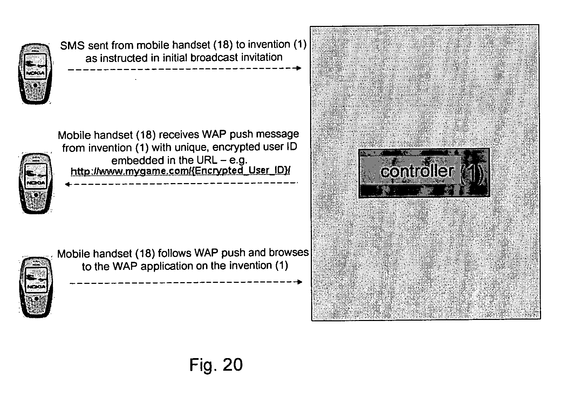

Reference is now made to Fig. 20, which is a simplified diagram of a process combining the processes of Figs 16, 18 and 19 according to a preferred embodiment of the present invention. Elements of Fig. 20 are referenced by the same numbers used in Figs 16, 18 and 19.

It is appreciated that when the audience participation controller 113 has to determine a preference between users 110 based on user responsiveness, namely the time elapse between a request for a user response is provided to the user and the time the user provided a user-response, the audience participation controller 113 preferably averages the values of responsiveness for each user and compares the averages.

The audience participation system of the present embodiments is designed to take audience participation into a new dimension, enabling the producers of broadcast programmes - and particularly live programmes - not only to stimulate general interaction with a broadcast audience as a whole, but also simultaneously to initiate and manage specific interactions with those individuals and groups in the audience who are actively participating.

### Audience-Participation Controller - Overview

The broadcaster is preferably provided with an audience participation controller. When using the audience-participation controller the broadcaster initiates audience participation in the traditional way, by broadcasting an invitation to the audience to respond on a selected topic. The audience is invited to respond individually, each using their own personal communications device - which, in the preferred implementation of the invention is a mobile internet MI enabled mobile phone. Currently the vast majority of mobile telephones are Internet enabled.

MI phones are capable of having MI pages transferred to them from MI sites. MI sites are installed on personal communications gateways, which, in the preferred implementation of the invention, are MI gateways. Personal communications gateways are embedded in the public mobile phone communications networks. MI pages enable those programming them to create and transfer interactive, multimedia presentations onto the screens of MI phones, via MI gateways. MI pages can be navigated and interactively modified by the person using the data entry keypad of the MI phone, and the response parameters relating to the page can be transferred back to the MI gateway. This interactivity is achieved in a similar manner to which a person using a QWERTY keyboard on a personal computer can navigate and respond to an interactive web page received from an internet website, and send the response parameters back to the website via the internet. WAP (wireless application protocol) is a type of mobile internet MI protocol.

The controller rapidly and automatically captures the audience response data from the personal communications devices. At the same time, the data processing system rapidly and automatically aggregates, analyses and processes this response data into results and production management information. Use of such a controller offers audience-participation capabilities which will be explained later in this document.

The processed results, management information and new audience-participation features are controllable by and accessible to the production team in the production studio in various electronic forms via the interfaces of the present embodiment. Processing delays within the present embodiment are constantly minimised to the extent that both the production team and the audience perceive that the present embodiment produces results, management information and new audience participation features in real time.

Simultaneously, the present embodiment preferably saves all available information relating to all the respondents and their responses in an associated database.

The production team uses the processed results as a live audio-visual programme source for instantaneous mixing with other programme sources, such as camera and microphone outputs, within the programme chain. In this way, rapidly processed results and other audience participation features are fed back to the audience as an integral part of the programme.

At the same time, the production team can instruct the controller to feed back to each individual respondent's personal communications device, a set of individual messages tailored specifically for each individual respondent. Such messages may include, but are not limited to showing the individual's own personal results and ranking in a nationally broadcast competition, while the processed results broadcast to the audience via their broadcast receivers might only list the top 10 rankings.

The concept of managing and controlling interaction with the general broadcast audience independently, but simultaneously with individuals and groups within the audience who are actively participating, creates countless new ways of stimulating and controlling audience-participation; offering creators of formats and their production teams many exciting new possibilities.

In addition, while the programme is on-air, the production team can rapidly search the controller's databases for particular individual or group profiles within the mass of data received from respondents, in order to identify and select the most ideal individuals and groups as prospective audience-participants. When these selections have been made, the production team can instruct the controller to send messages to the personal communications devices of targeted individuals and groups in the form of personalised invitations to participate in the programme.

Furthermore, whether the programme is still on-air, or later, when the programme is off-air, the production team can use the controller in stand-alone mode to send any other messages they consider appropriate; either to the individuals or groups specially selected during programmes, or to any other individuals or groups that may be profiled and identified at any time within the database of the controller.

Consequently, the production team can use the controller to further develop innovative audience-participation events - preferably independently of the original broadcast medium - using the audience's network of personal communications devices as the exclusive, stand-alone MI-cast & audience-interaction medium for staging these events. Such new ideas may be applied to any entertainment, marketing or gambling application that the production team may choose to create.

### Audience Participation Controller - Further Description

Reference is now made to Figs 11 and 12, which provide schematic representations of the controller of the present embodiment; and various physical, logical and electronic boundaries and exchanges between the controller and neighboring systems which the controller may connect to or interact with.

The same graphical symbols arrows and boxes are used interchangeably to describe sometimes physical, sometimes logical and sometimes electronic boundaries and flows. The description makes clear in which context the reader should interpret each individual element shown in the drawings.

The capabilities and benefits of the present embodiment are appreciated more easily by describing the wider context in which it is applied. Fig. 11 shows the controller 1 connecting with and interacting with, on the one hand, the programme production facilities 8 commonly found in a broadcast programme production studio 2 and, on the other hand, with the public communications networks 3.

Before describing in detail the interactions between the various elements of the system, the basic function of each element will be explained.

Controller 1 is the audience participation controller. The controller is a computer system and the elements described within element 1 represent the logical components of the controller 1, namely the clients I/O module 4, the database 5, and the business logic module 6. Each of these are described in greater detail hereinbelow. These elements communicate with each other bi-directionally in the usual way. Controller 1 also includes a specialised programme production interface 7 also described in greater detail hereinbelow.

Block 2 represents the physical boundaries of a broadcast programme production studio. The production interface 7 of the controller 1 is located in the production studio 2 and can be located remotely from the rest of the controller 6 5 4 if desired. The production interface 7 communicates on a bi-directional basis with the rest of the controller 6 5 4 via the bi-directional electronic links 23 24.

Broadcast programme production facilities 8 are those commonly found in a production studio 2. The production interface 7 communicates on a bi-directional basis with the other production facilities 8 via the electronic links 25 26.

### Programme Production Studio - Detailed Description

Turning now to Fig. 12, and parts that are the same as in the previous figure are given the same reference numerals and are not referred to again except as necessary for an understanding of the present embodiment. Fig. 12 expands the contents of5the box representing the production studio 2 and explains the elements therein in more detail. Electronic link 25 in Fig. 11 represents a group of links which are expanded in Fig. 12 into 25A 25B and 25C.

Link 25A is the API Application Program Interface connection of the production interface 7 through which messages are transferred to target API devices 8.2. API devices are designed to interpret data sets in predetermined formats which are then transformed by the API device into appropriate audio-visual formats suitable for output to a broadcast control console 8.6. In the preferred implementation of the present embodiment the target API device 8.2 is typically a TV graphics generator of the type commonly found in a TV production studio, a typical example being an Aston caption generator.

Link 25B is the broadcast-ready output of the production interface 7 through which appropriate audio-visual signals are transferred to the main programme control console 8.6. The control console 8.6 is typically a video switcher or mixer of the type commonly found in a production studio 2. In the preferred implementation of the present embodiment, the audio-visual signals are typically transferred in PAL, NTSC, SECAM and / or analogue audio format, or digital equivalents

Link 25C is the system management output of the programme production interface 7 which transfers messages to the system management computer 8.1, typically a general purpose computer. 26 is a link which transfers messages from the system management computer 8.1 to the programme production interface 7.

Other programme sources controlled in the production studio 2 may include, but need not be limited to remote broadcast sources such as a camera feeds and / or microphones 8.4 and local broadcast sources such as a playback machines 8.5, which might be tape-recorders or disc players.

### Audience Participation Controller - further Description - Part 2

Returning to Fig. 11, the main programme output 9 from the production studio 2 is sent to the broadcast transmitter or distribution centre 10, for broadcast via the chosen broadcast medium 11. In the preferred implementation of the controller 1, the broadcast medium 11 is typically terrestrial TV transmission.

The broadcast programme 9 is transmitted in this way to an array of individual broadcast receivers 12, 13 & 14. In the preferred implementation of the present embodiment, these broadcast receivers are typically TV sets.

The entire array of individual broadcast receivers is represented within the drawing by the dotted line 13 which stretches between the box representing one of many receivers 12 and box representing the "nth" of many similar receivers 14. For reasons of simplicity, only one broadcast receiver of many 12 is considered in context with the process described in the drawing, although identical processes apply equally to all individual broadcast receivers 12, 13 & 14 which are receiving the transmission 11.

Likewise, only one individual in the broadcast audience 15 and only one personal communications device 18 being used by that individual are considered in context with the process described in the drawing, although identical processes apply equally to each individual in the broadcast audience 15 and their individual personal communications devices 18. In the preferred implementation of the controller 1 the personal communications devices 18 are typically MI phones.

Block 16 represents the programme on the broadcast receiver 12 being watched or listened to by the audience 15. Block 17 represents the physical operations, typically the operation of alphanumeric & navigational arrow keys, made by the audience 15 on the data entry keypad of their personal communications devices 18.

Block 3 represents the public communications networks, typically mobile phone networks, which carry messages between the audience's personal communications devices 18 and the controller 1. The public communications networks 3 contain personal communications gateways 20. In the preferred implementation of the present embodiment, these gateways are typically MI gateways. Each personal communications gateway 20 has one set of bi-directional links 19 21 between the communications gateway 20 and each of the audience's personal communications devices 18 and another set of bi-directional links 22 27 between the communications gateway 20 and the clients I/O module 4 of the controller 1.

In the preferred embodiment of the controller, which is implemented using MI enabled mobile phones, the core of the controller is based on well established client-server computer technology which is commonly available. The server function of the overall system is performed by the clients I/O module 4, database module 5 and business logic module 6 components of the controller 1. The client functions of the overall system are performed by the array of personal communications devices 18 used by individual members of the audience 15 who decide to participate in and respond to the interactive broadcast. In this context, the terms "personal communications device" and "client" are synonymous, and the terms "clients I/O module" and "server" are synonymous.

The clients I/O module / server 4 and database module 5 components of the controller 1 are controlled by the programs installed in the business logic module 6. The business logic module 6 also controls the programme production interface 7 of the controller 1.

The specialised program logic embedded in the business logic module 6, combined with the specialised operational control and electronic interfacing & connection facilities available on the programme production interface 7 provides the programme production team with a production tool for stimulating, managing and controlling audience interaction within the broadcast programme production process. In addition, the programme production interface 7 provides the production team with many audience-participation capabilities and features, as will be explained in greater detail below.

### The Audience Participation Controller - A Production Tool

Rather than focus exclusively on the functionality of the controller 1 itself, the overall production process will be described, so that the functionality of the controller 1 may be more easily appreciated within the context of the workflow involved in producing an audience-participation programme.

Both the course and the eventual outcome of a broadcast programme involving audience participation are invariably unpredictable. It is therefore, impossible to plan every detail of such a programme in advance. If a prospective audience-participation programme format is to be successful, the production team needs a certain amount of flexibility in how it steps through, switches between or skips the various stages and options which may be envisaged as possibilities before each programme commences. Due to the unpredictable nature of audience participation, the various stages and options envisaged before a programme begins may, or may not actually materialize or progress in the expected manner when the programme actually goes on-air.

Therefore an important part of pre-broadcast preparation involves the creation of a series of audio-visual cues to be broadcast to the audience. These cues offer specific invitations to the audience, encouraging them and instructing them how to respond to each possible stage of the interactive programme that can reasonably be envisaged in advance. These invitations are designed to be broadcast to the audience as a whole in the usual manner, and are prepared by production staff in the usual way, using the production facilities 8 commonly found in a broadcast production studio 2. In tandem, a series of interactive question pages - which, in context with the preferred implementation of the controller 1, is a series of MI pages - is created to match the series of broadcast invitations described above. These question pages are designed by production staff using the systems management computer 8.1 in conjunction with appropriate computer applications running on the business logic module 6 of the controller 1 via link 26, the programme production interface 7 and link 23.

These question pages are designed to be transferred 22 from the clients I/O module / server 4 of the controller 1 onto the communications gateway 20, and then further transferred 21 at the appropriate time onto the individual personal communications devices / clients 18 of each respondent 15 in the audience.

To give only one simple example, the programme being broadcast may involve a multiple choice quiz. The first invitation broadcast to the audience's broadcast receivers 12 13 14 might say "Choose A, B, C or D". The first question page to be transferred onto the audience's personal communications devices / clients 18 would therefore enable the respondent to select A, B, C or D, and send a response. The second invitation might say "Choose E, F, G or H", and the second question page would therefore enable the respondent to select E, F, G or H, and send a response. And so on.

It is therefore most important that the production team has a means of keeping in-step the broadcast of each individual invitation with the transfer of each matching question page.

### Key Logical Processes & Transactions

Having projected and prepared all the invitations and matching question pages, the programme goes on-air. At the appropriate cue-point, the production team feeds the first invitation through the control console 8.6, to be broadcast to the audience 15 via the transmit and receive chain 9 10 11 12 13 14.

At the same time, the production team makes the matching question page available on the clients I/O module / server 4 to any participating personal communications device / client 18 which makes the appropriate request of the clients I/O module / server 4 via the personal communications network 3 19 20 27. The production team makes the matching question pages available in this manner by using the general purpose computer 8.1 in fig. 11 to make the appropriate command via 26 7 23. In context with the preferred embodiment of the controller employing MI enabled mobile phones, it is necessary to manage this process in the manner described. This is because current industry-standard MI protocols which govern the operational features of MI client / server relationships do not allow the server 4 to unilaterally transfer data to target clients 18. Data may only be transferred to a client 4 if the client 4 requests the server 4 to do so.

The first invitation at the beginning of each programme is unique. It presents the prime opportunity for the production team to persuade viewers and listeners in the audience to participate in the programme. Many of the audience may never have responded before, and any details will not be recorded on the database 5. Therefore, the first invitation would typically be a generic announcement which describes in explicit detail how prospective respondents 15 can use their personal communications devices / clients 18 to request the first, matching question page.

The first question page is also unique. Typically it would present a generic welcome message to the new respondent, and conduct a set of tests which would not only confirm to the respondent 15 and the controller 1 that the system is working properly, but would also give the controller 1 an opportunity to check, for example, which type of personal communications device / client 18 is being used, and to calculate what time delays each device may be encountering in transferring messages across the public communications network 3. A more detailed description of key logical processes and transactions is given below.

One of many individuals 15 watching the programme 16 sees the invitation and decides to participate. The respondent follows the instructions being broadcast and operates 17 his/her own personal communications device / client 18 to dial up special phone numbers and / or request 19 the clients I/O module / server 4 via the personal communications gateway 20 embedded in the public communications network 35to transfer 21 the question page matching the invitation onto the respondent's personal communications device /client 18.

As explained above, one of the difficulties with mobile phones is that it is difficult to input web addresses. Therefore in a preferred embodiment the user simply dials a preset number. The preset number triggers a text message to be sent to the user. The text message has a URL embedded therein and when the text message appears on the user's screen, the user can select the URL in order to trigger a request to download the necessary content.

The respondent 15 then views the choices displayed on the screen of the personal communications device / client 18. By operating 17 the data-entry controls on the personal communications device / client 18, and navigating the question page, the respondent 15 makes the appropriate selections and ultimately activates the send command in order to transfer 19 27 the completed response back to the clients I/O module / server of the controller 1 via the personal communications gateway 20.

In the course of a programme, the controller 1 may receive extremely high volumes of response data from respondents 15 via the public communications networks 3. The components of the controller 1 are designed to be scalable in order to cope with wide variations in demand, in proportion to the anticipated popularity of any particular interactive programme. The issue of scalability is discussed in greater detail elsewhere herein. Equipped with appropriate bandwidth, storage capacity and processing power, the business logic 6 of the present embodiment can receive, analyse, and process response data from the audience 15 and produce processed results, management information and other audience-participation features in what is perceived by the production team and the audience as "real-time". A more detailed description of key logical processes and transactions is given hereinbelow.

Consequently, while the programme is on-air, the production team can use the systems management computer 8.1 of Fig 12 to continuously request processed information from the controller 1 for display on the systems management computer 8.1 in the production studio 2. These capabilities enable the production team to make critical production decisions in real-time as the programme develops, as described in greater detail below.

Systems management information may include, but is not limited to alphanumeric and graphical displays showing absolute numbers of audience respondents 15 at that point in time; absolute numbers and percentages of types of response at that point in time, typically aggregated votes or choices from multiple choice, or breakdowns of most popular selections from free text entries; together with tables and graphs showing the time and volume profiles of the response data traffic at that point in time.

In response to further requests initiated from the general purpose computer 8.1, controller 1 sends to the production interface 7 a wide variety of processed results in a wide variety of broadcastable formats. This enables the production team to select the processed results they want, and immediately put them on-air. Consequently, the audience watching the broadcast can see and hear the results developing in real-time as responses come in. This is a very powerful feature in context with the stimulation of audience interactivity.

In addition, the production team may devise completely new styles of audience participation. As the broadcast of a multi-question quiz progresses, individual respondents 15 may be sent continuous and detailed analyses of their own performance - such as running totals, average response times, and graphical representations of overall ranking & ranking trends - while the overall audience rankings appearing on the main broadcast might be limited to the top 10 or so contestants, as discussed in greater detail hereinbelow.

Processed results for input to the API device 8.2 may be configured in a variety of data, alphanumeric and graphical formats on link 25A depending on the specific data format of the target API device 8.2. In the preferred implementation ofothe controller 1 the target API device is a TV graphics generator 8.2 of a type commonly found in the production studio 2, such as an Aston character generator.

The graphics generator 8.2 is then operated in the normal way, enabling graphical representations 8.3 of the processed results to be input to the control console 8.6. In this way, processed results in appropriate audio-visual form can be mixed into or superimposed onto the main broadcast programme output 9 and fed back to the audience in real-time.

Alternatively, if the production facilities 8 do not include a suitable API device 8.2, then in response to further requests initiated from the systems management computer 8.1, an additional set of processed results presented in a variety of broacast-ready audio-visual formats may be generated by the controller 1. In the preferred implementation of the controller 1, these results may be configured on link 25B in PAL, NTSC, SECAM and / or analogue audio formats, or digital equivalents, appropriate for direct input to the control console 8.6. In this way, processed results in appropriate audio-visual form can be mixed into or superimposed onto the main broadcast programme output 9 and fed back to the audience in real-time.

As the core of the controller 1 is a computer system, the controller 1 may be flexibly programmed to meet the individual needs of different programme production teams with regard to the data sets and formats required for generating production management information, API data sets, broadcast-ready audio-visual elements and other advanced audience-participation features.

### Optimising Network Performance - Creating a Level-Playing-Field

Reference is here made to the more detailed description of key logical processes and transactions provided below.

Returning to Fig. 11, responses sent to the controller 1 via links 19 and 27 may be received from different respondents 15 via a number of different public communications networks 3. Because network performance can vary between different networks operated by different operators, there can be significant differences in how quickly a response gets to the clients I/O module / server 4 of the controller 1 from one respondent's personal communications device / client 18 as compared with another 18.

If a production team is broadcasting an interactive programme which involves time-critical measurements - for example in running quizzes and competitions Which judge the performance of respondents on the basis of how quickly they answer questions - then this technical limitation can cause serious problems.

The present embodiment has been refined to create a level playing field for participants of audience-participation programmes involving such time-critical formats. When the controller 1 receives each response, it instantly sends an automatically generated time-proving message back to the personal communications device / client 18 from which the original response message came, and logs the time of despatch of this message. This time-proving message includes the necessary protocols and commands required to instruct the personal communications device / client 18 to immediately send a time-proving return message back to the controller 1 which also logs the time that each individual time-proving return message is received. Suitable protocols are discussed in greater detail below.

By comparing the time of dispatch with the time of receipt of the return message, the controller 1 calculates and maintains an individual network delay parameter for each respondent. This parameter is stored on the database 5, constantly updated following each new response, and used to produce adjusted response times for each individual response before calculating processed results. In this way, the present embodiment's level-playing-field feature provides a means of equalising all respondents' time-performances on a fair basis before processing and producing rankings and results.

It should be noted that other time-delays may be encountered across the broadcast network 9 10 11, as well as across the public communications networks. If a production company is using a number of different broadcast network paths in order to broadcast to different segments of the audience 15, then different segments of the audience 15 may receive the broadcast at different times, according to the different time-delays inherent in the different broadcast network paths. Consequently, depending on how critical the overall time-accuracy is in relation to a particular audience-participation broadcast, it may be necessary for the production team to ensure that appropriate time-delays are introduced at various points in the broadcast distribution system, in order to ensure that the entire audience 15 receives the broadcast 11 at exactly the same time.

### Keeping Broadcast Invitations In-Step with Transferred Question Pages

Some audience-participation formats require that when each successive, pre-programmed invitation is selected and broadcast to the audience 11 12 13 14, each successive matching question page should be transferred on request 22 20 21 in-step, onto each requesting personal communications device / client 18 ready for respondents 15 to view the screens on their personal communications devices / clients 18, make decisions and generate immediate responses 17 19 27.

The controller 1 has been further refined so that once the respondents 15 have logged on to the controller 1, the production team has the means to keep successive question pages displayed on requesting personal communications devices / clients 18 in-step with the matching broadcast invitations without any further operational intervention 7 by the respondents 15. The in-step feature is implemented as follows

During the course of the programme, and depending on how the programme develops on-air, the production team may select any of the pre-programmed invitations or audio-visual cues to be broadcast from the batch that was prepared before the broadcast started. These are prepared, ready for broadcast in the normal way in context with the facilities 8 available in the studio 2.

Having prepared the next invitation for broadcast, but before it is mixed or switched on-air, the production team uses the systems management computer 8.1 in Fig. 12 to select the matching question page from the batch of pre-programmed possibilities that were transferred to the controller 1 before the broadcast.

While these selections are being made, completed responses to the previous question have been coming in. Part of the response logic is that when a response is submitted, and after the time-proving return message has been received and logged, the business logic module 6 sends a message via the clients I/O module / server 4 to each personal communications device / client 18 instructing it to go into a holding pattern until the next question page becomes available. This technique involves redirecting personal communications devices / clients 18 to the results page, which has a number of holding features.

During phase 1 of the holding pattern, when personal communications devices / clients 18 request the results page, they are instructed to make further requests of the results page after a defined period of time. This keeps all personal communications devices / clients 18 rotating around the results page while the production team decide when to advance to the next question.

Once the cue point for the next question page has been decided in the studio 2, the production team initiates a countdown using the systems management computer 8.1. When this countdown is triggered, the holding pattern switches into phase 2.

Now, instead of rotating personal communications devices / clients 18 on a constant delay basis, the results page instructs each personal communications device / client 18 to redirect, and request the next question page from its proper location at the time when the countdown is scheduled to reach zero.

The simultaneous switching on-air of the invitation at the same point in time that the matching question page is made available to all requesting personal communications devices / clients 18 may be executed manually by production staff monitoring the countdown, through independent but simultaneous operation of the control console 8.6 and the systems management computer 8.1. Alternatively, the business logic module 6 may be preprogrammed by production staff via the systems management computer 8.1 to perform this simultaneous operation when the countdown reaches zero via links 25A and / or 25B [broadcast invitation] and 22 21 [question page transfer].

Consequently, when the countdown reaches zero, all the personal communications devices / clients 18 request the next question page at the same time that the next broadcast invitation is switched or mixed on-air.

If necessary, the controller 1 may be programmed to send additional automatic switching and mixing protocols from the production interface 7 to the control console 8.6 via link 25B in order to provide the production team with more operational flexibility.

In this way, the controller 1 provides the production team with all the capabilities to ensure that all the creative elements of a wide variety of audience-participation programmes can be kept in-step within the framework of a flexible and spontaneous production process.

### Database Operations - On-air

All responses are stored on the database 5 along with data profiles relating to all respondents 15, including, but not limited to the topics that each individual has responded to, and the level of interest or involvement in each topic. Relative levels of interest or involvement may be deduced from the level of knowledge, skill or response time achieved by each respondent 15 during the course of a programme. It is possible for the production team to use this information on-air in a variety of ways. For example, the production team can use the systems management computer 8.1 to interrogate the database 5 in order to select suitable individuals and groups to act as featured participants in an interactive programme, and to send personalised messages to selected prospects automatically from the controller 1.

### Messaging & Database Operations - Stand-alone

However, the controller 1 can also be used off-air as a stand-alone entertainment, marketing and gambling platform. Messages of all kinds can be sent at any time from the controller 1 to all previous respondents 15 who have participated in all previous programmes. Such messages may be presented in the form of invitations to participate in all kinds of stand-alone activities. In addition, because the database 5 holds all data relating to all respondents, it is possible for the controller 11 to personalise each message that is sent out.

### Stand Alone Audience-Participation Events & Applications

The controller 1 is also designed to initiate and host stand-alone audience-participation events using the network of personal communications devices 18 as the exclusive, stand-alone MI-cast medium for staging these events. Consequently, the production company operating the controller 1 can use it to create all manner of stand-alone entertainment, marketing and gambling spin-offs from the initial audience-participation broadcast programme formats.

Any audience-participation activity can be set up and managed involving any set or sub-set of respondents 15 logged on the database 5. The controller 1 can also be configured to transfer messages encouraging respondents 15 to set up their own virtual groups or communities on the database 5 for the purposes of competing directly against their friends, families or peer groups; or for forming teams drawn from these groups to compete against others.

The controller 1 can also be configured to allow respondents 15 to use their own personal communications devices / clients 18 in combination with the multi-media messaging power and features contained in the controller 1 in order to invite friends and colleagues to participate in such communities of interest, and also to manage community affairs using the facilities offered by the controller 1. Such features may include, but are not limited to, group contact lists, group diaries of events, group bulletin boards, group rankings, nicknames of individuals within groups, group log-on status and group messages, including specifically designed multi-media welcome messages.

The individuals within these communities of interest can interact with each other within the group, or groups can interact with other groups, either completely independently in a stand-alone context, or in-step with an on-air interactive broadcast.

### Stand-alone Marketing Platform

In addition, stand-alone audience-participation activities can be extended into the field of pure marketing. Independent market surveys can be initiated from the present embodiment, and a wide variety of marketing spin-offs can be created, including but not limited to wild cards, bonuses, introductory offers, sponsored interactive events, promotional messages, electronic discounts & coupons and any other inducements to participate in either in-step or stand-alone entertainment, marketing or gambling activities involving audience-participation. All stand-alone activities can be linked back into any current or future in-step productions.

### Call to Action Feature

A further aspect of the present embodiments in relation to both in-step and stand-alone activities is the capability to display a personalised call-to-action message onto the personal communications device / client 18 of each respondent 15 logged on the database 5.

The controller 1 displays the call to action by transferring 22 20 21 a call-so-action page onto to each respondent's personal communications device / client 18. In context with one particular implementation of the controller 1, this capability is achieved by invoking the WAP-push protocol on a WAP gateway 20 embedded in the public communications network 3.

The call-to-action feature is useful in notifiying regular participants that an audience-participation broadcast is about to take place. It automatically sends a personalised message in advance to each regular participant profiled on the database 5, and, at the appropriate time, instructs each regular participant's personal communications device / client 18 to request that the appropriate question page be transferred onto the device / client 18. In this role, the call-to-action feature can be linked to, and automatically triggered from an electronic programme guide EPG.

The call-to-action feature is also useful in context with the stand-alone activities previously described. Personalised call-to-action promotions and reminders for off-air audience-participation events can be initiated by the production team and automatically sent out by the controller 1 to all respondents 15 whose details are recorded on the database 5. In addition, personalised call-to-action promotions and reminders can also be initiated by individuals and groups for dispatch to any other individuals, friends, families or groups in order to publicise and manage any audience-participation activities that these individuals and groups may wish to organize, either within groups, or between groups.

Finally, a great variety of interactive branded & sponsored market surveys, questionnaires, advertisements, promotions, games or competitions can be initiated through the personalised call-to-action feature. These activities are managed end to end by the controller 1 via the systems management computer 8.1.

### Preferred Implementation vs. Other Possible Implementations

It is noted that the preferred implementation of controller 1 as described herein is only one of a number of possible ways of implementing the controller 1.

For example, it should be noted that the controller 1 has great potential to transform radio, or audio-only broadcasts into audio-visual and multimedia audience-participation experiences.

Other alternative implementations include, but are not limited to those described in the tables immediately following.

New technologies may emerge which perform the functions of the system elements listed in the tables under "Generic Type", and which may displace those technologies listed under "Preferred Implementation" and "Alternative Implementation".

However, the present embodiment will continue to offer full functionality and capabilities regardless of any technological advances relating to the broadcast 8 9 10 11 12 13 14 and / or public communications network systems 3 with which it is required to be connected to or interact with.

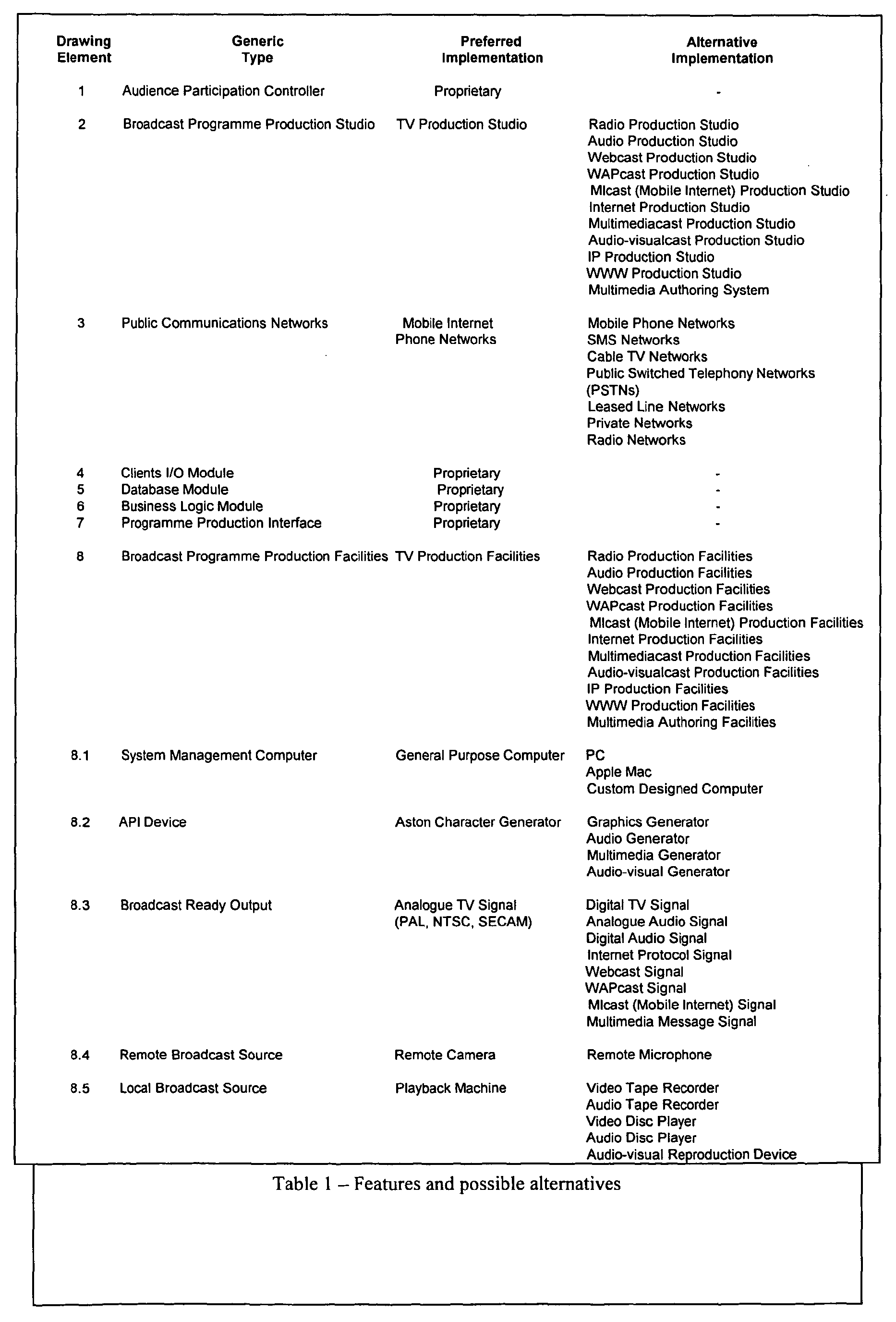

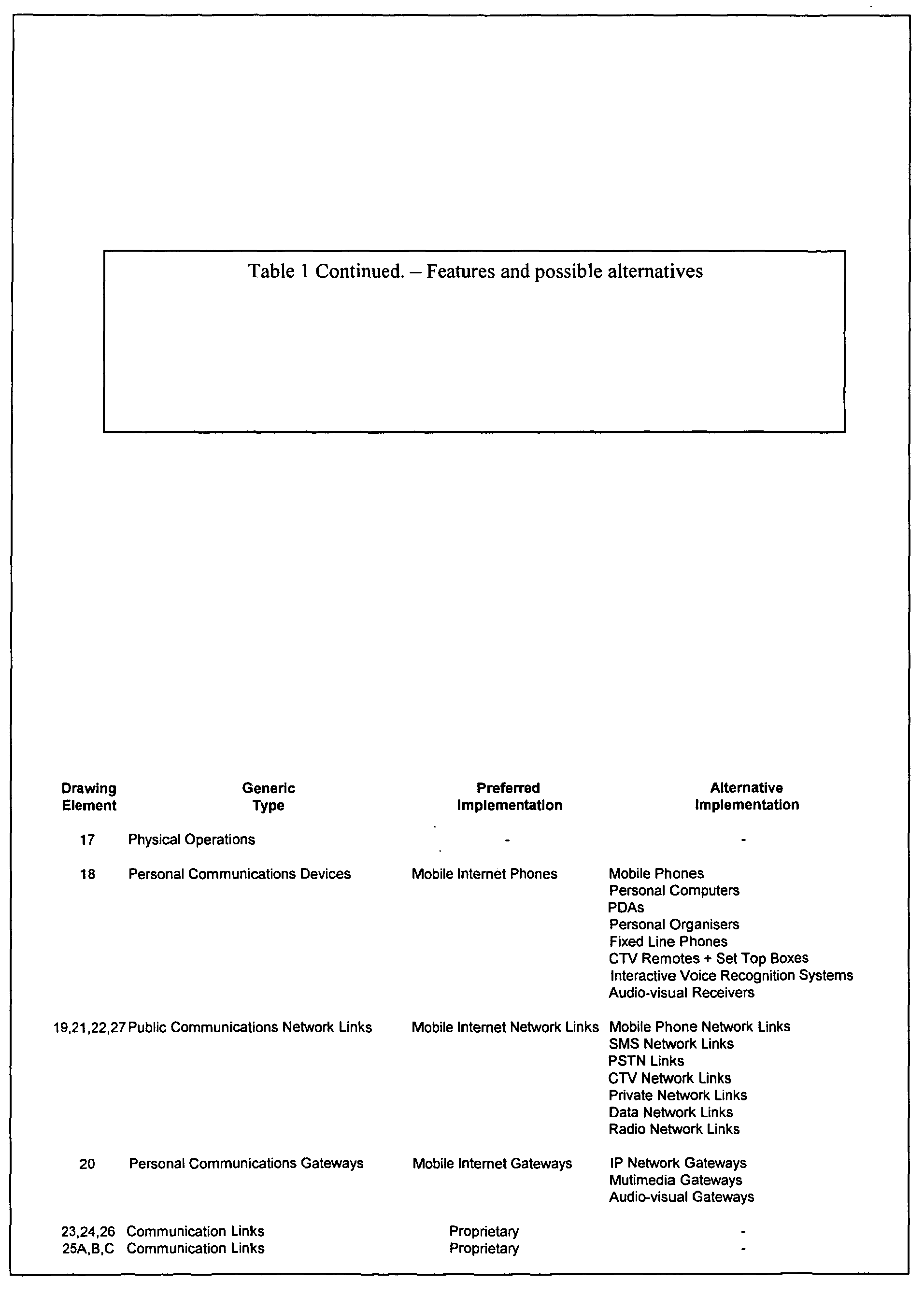

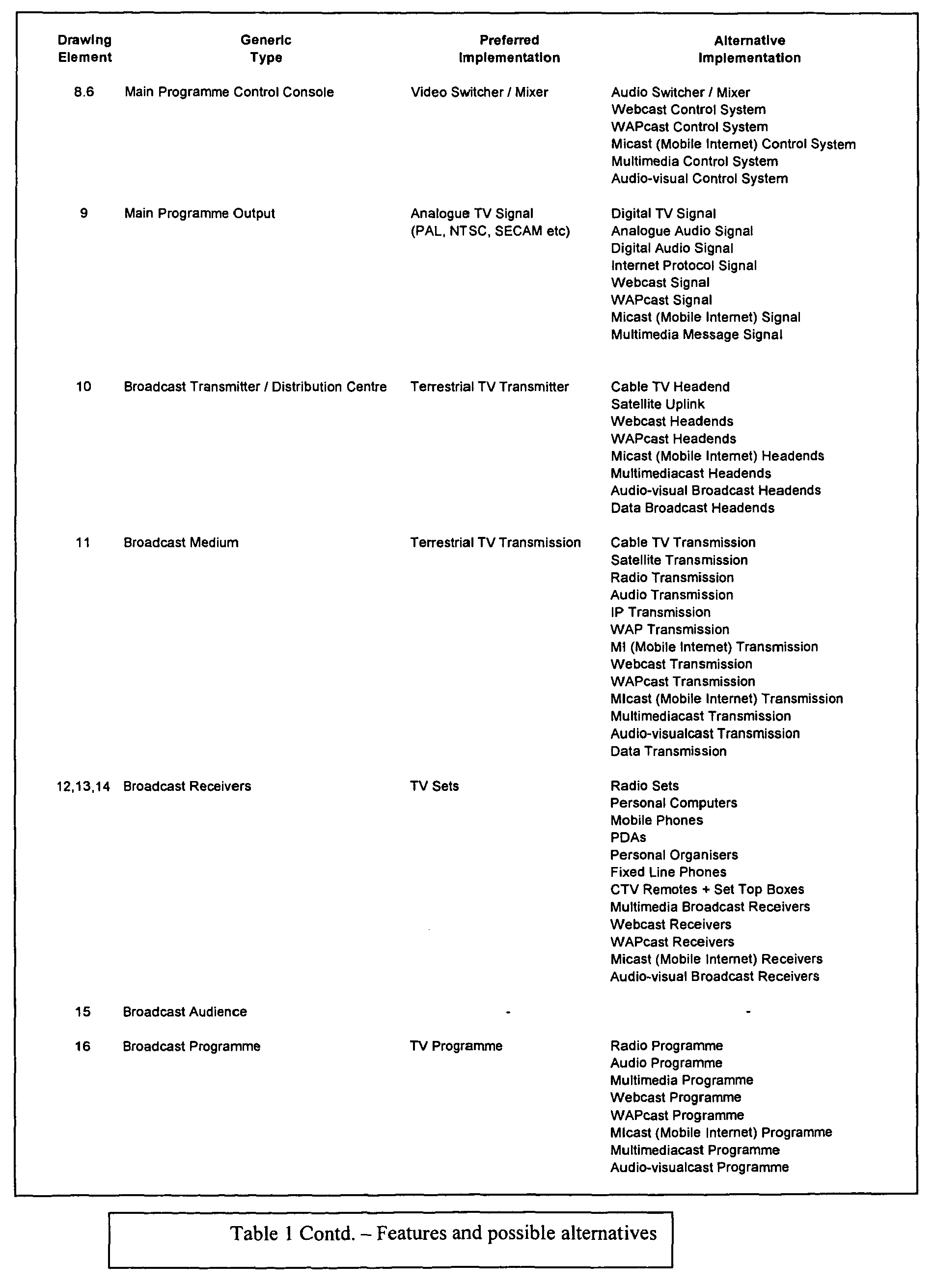

Reference is now made to Fig. 13, which is a simplified diagram illustrating the software components involved with controller 1. Database 5 is managed by database control routines 6.5 within business logic module 6. Business logic module 6 will be discussed in greater detail below but includes database control routines 6.55as mentioned, public network optimization routines 6.3, client I/O controller routines 6.2, results processing routines 6.4, systems management routines 6.6 and studio controller routines 6.7. The studio controller routines interface with programme production interface 7 and the clients controller routines 6.2 interface with public communications networks 3.

### Business logic module

The Business Logic Module 6 is a suite of computer programs which controls all functions of the Audience Participation Controller 1. One possible implementation of the software architecture of the Business Logic Module 6 is described with respect to Fig. 11 above, and is shown within the boundaries of the dotted-line box 6. Other different implementations are equally possible.

### Programme log-on

At the beginning of an audience participation event in-step or stand-alone the highest system priority is put on ensuring that all new respondents 15 are logged on properly, and that all systems are functioning properly. These processes are initiated within the systems management routines 6.6. For example, when a show starts, the first invitation is broadcast to the broadcast receivers 12 13 14. This first invitation is important in relation to the capture of data from first-time respondents, as their details will not yet be logged on the database 5. The first invitation therefore gives explicit instructions, so that respondents can operate their personal communications devices / clients 18 in order to dial up, log on to the controller 1 and make the appropriate request of the clients I/O module / server 4 for transfer of the welcome page onto the personal communications device / client 18.

During the period following the first invitation, the highest priority for the systems management routines 6.6 is to call relevant programs within the suite of database control routines 6.5 in order to compare the data contained in each log-on received by the client's I/O controller routines 6.2 with the data already stored on the database 5, and to create new records in the database 5 for new respondents 15.

Data stored in this way includes, but may not be limited to, the calling line ID caller's phone number and IP address of the personal communications device 18, as well as the IP address of the personal communications gateway 20 through which the respondent's message is routed. This data is not only used to identify each respondent 15, but it is also of use to subsidiary respondent-management routines which may, for example, perform such activities as fraud-detection, anti-hacking, bad-credit and troublesome respondent barring.

Subject to agreement with each respondent 15, each phone company and the observance of relevant data-protection laws, it may also be possible to receive individual respondent's data relating to location based services. Such information is invaluable in relation to analysing the geographical distribution of completed responses. This information could, for example, be used to work out geographical variations in voting patterns, or other preferences related to the audience-participation event taking place.

### Public communications network optimisation

The next task for the systems management routines 6.6 is to invoke the public network optimisation routines 6.3. These routines check the latency of the public communications networks as described in greater detail hereinbelow. They periodically check the delays being experienced by each respondent's personal communications device / server 18, and create, store and maintain a network delay parameter for each respondent 15. In this way a level-playing-field is created and maintained for all time-critical audience-participation formats.

### Event initiation - keeping invitations in-step with matching responses

When sufficient time has been allowed for all existing and new respondents to log-in properly, the audience-participation event proper may be initiated.

For some audience-participation formats, the priority at this stage may be to ensure that invitations are broadcast at the same time that matching question pages are made available for transfer and display on the screens of the respondents' 15 personal communications devices / clients 18. Before the next invitation can be broadcast, 15 the production staff in the studio 2 must key in the appropriate command to the systems management computer 8.1. The systems management routines 6.6 receive this command via the programme production interface 7. This triggers the systems management routines 6.6 to invoke the in-step logic feature described in greater detail below which makes available the matching question page to be transferred from the clients I/O module 4 to each requesting personal communications device 18, thus ensuring that all respondents see the question page on their personal communications devices / clients 18 at the same time that the matching invitation is broadcast to receivers 12 13 14.

### Handling mass response

In the context of the most popular audience-participation events, the response handling stage of the process may cause a very large burst of data across the public communications networks 3, as responses come in. As the throughput of personal communications gateways, and particularly MI gateways 20 may be limited, this constraint could be the cause of a response bottleneck, and response data could be delayed, or lost.

In order to optimise the performance of low-capacity network nodes, a data load-spreading feature is invoked by the network optimisation routines. The feature is described in greater detail hereinbelow.

By using the personal communications gateway routing information received with each completed response, the network optimisation routines know how many respondents are logged on to each mobile internet gateway 20. When question pages are pushed out to the respondents' 15 personal communications devices / clients 18 the network optimisation routines embed an individual response timeout parameter into each question page. These messages instruct each individual personal communications device / client 18 to wait for a defined period before sending a completed response. By staggering the response timeout delays over an appropriate period of time, the responses do not all happen in a simultaneous burst, but are spread in a much more manageable time-sequence, allowing a personal communications gateway 20 of limited capacity to deal with much more response data than if it all arrived in time with the actual responses made by respondents.

It is preferable that these processes are invisible to respondents 15. In order to maintain respondent confidence, the instant that the respondent 15 clicks the send command, the screen immediately acknowledges that the completed response has been sent. This message is pre-programmed for local execution within the personal communications device / client 18. Although the response timeout parameter delays the dispatch of the completed response page from the personal communications device / client 18, the actual elapsed time between the time that the device / client 18 received the question page, and the time that the respondent 15 operated the send command is embedded in the response message. Therefore, the respondent 15 is not disadvantaged in any way.

### Processing results

As the responses come in, equal priority is given to a number of simultaneous processes within the business logic module 6. The systems management routines 6.6 ensure that in addition to running the clients I/O controller 6.2 routines, all the necessary public network optimisation 6.3, results processing 6.4, database control 6.5 and studio I/O controller routines 6.7 are run concurrently, in order to continuously receive, store and process completed responses; and transfer processed results according to the wishes of the production staff.

For each completed response there will be a variety of tasks to perform - not necessarily in the following order, and including, but not limited to:
log the time of receipt of each response
send corresponding time-proving message to each personal communications device
log the send time
log the time of receipt of each time-proving return message
store all the times on the database
calculate each network time delay parameter
adjust each response time with its network time delay parameter
log each adjusted response time in database
verify answers in response
log result - correct / incorrect in database
send message to each respondent with result - correct / incorrect
continuously calculate & store total number of respondents to the current question
continuously calculate & store total numbers of each response selected
continuously calculate & store % of respondents from each possible response
continuously calculate & store % of responses received vs. respondents logged on
continuously calculate elapsed time since question page pushed
continuously rank all respondents - fastest time to correct answer
continuously calculate average response times of different types of response
correct / incorrect - types of votes
continuously store all free text strings in responses
continuously calculate total numbers of respondents submitting each text string
continuously calculate % of respondents submitting each text string
continuously rank most popular text strings
continuously calculate average response times of all responses

### Transferring processed results

As results are processed, they may be requested in a variety of alphanumeric and graphical forms by the production staff in the studio 2 for a variety of uses.

Production staff may use the systems management computer 8.1 of Fig. 12 to request the systems management routines 6.6 via the programme production interface 7 to transfer processed results to the systems management computer 8.1, the API output of the programme production interface 25A and / or the broadcast-ready output of the programme production interface 25B.

For example, the production staff may wish to monitor how the processed results are developing on-air, using the various facilities available on the systems management computer 8.1 before mixing or switching any processed results onto the broadcast output 9. During this phase, the production staff might request the business logic module 6 to transfer graphs to the systems management computer 8.1 showing the distribution of responses received during the initial period, so that the director can decide, for example, when the bulk of responses have been received.

Reference is now made to Fig. 14, which is a simplified chart of responses per unit time when responses are unmoderated. The chart shows that after 6 seconds, the responses per second reach their peak - at around 250 thousand responses per second.

Reference is now made to Fig. 15 which is the cumulative analog of Fig. 14 and shows cumulative numbers of users who have responded by a given time. Fig. 15 shows that by the time the responses per second reach their peak after 6 seconds, around 60% of audience-participants logged on have responded.

The graphs corresponding to Figs 14 and 15 develop dynamically as the results come in, giving the director immediate feedback. In context with a quick-fire quiz, the director, faced with such data, may decide that, with 60% of the logged-on audience responding within 6 seconds, he / she will not wait any longer for stragglers, and will move on to the next invitation / question.

On the other hand, should the audience-participation event involve a party political poll, then, at the same point in the response distribution process, the director might decide to request the business logic module 6 to transfer to the API output 25A or the broadcast-ready output 25B a bar-chart relating to the current processed result. Such a bar chart is illustrated in Fig. 16, which shows the total number of results received after a given time and their distribution as separate bars.

In response to the director's request the above would be broadcast to respondents 15 on their broadcast receivers 12 13 14. In context with the data traffic examples shown in the previous figures 14 and 15, Fig. 16 is a snapshot of the state of play after 7 seconds, and all the charts would continue to develop as more responses come in.

The director would know by looking at the "Cumulative % Responses" curve Fig. 15 on the screen of the systems management computer 8.1, that 7 seconds after broadcasting the relevant invitation, there remained 30% of audience-participants logged on who had not yet voted. In this case, the production decision might be to request the presenter to encourage the remaining voters to cast their votes - and the audience-participants would see Fig. 16 change dynamically on their TV screens as the remaining votes were cast.

By looking at the list of some example results as listed above, it is clear that there are many uses to which the production staff can put both the information available on the systems management computer 8.1 and the API 25A and broadcast-ready 25B outputs of the programme production interface 7. It should also be noted that these processed results may be tabular and alphanumeric as well as graphic.

### Aggregations and running totals

Processed results are not limited to data received in response to individual invitations / questions. It is equally possible for the production staff to request a number of aggregations and running totals, for example:
running average response time of all responses
running average % of responses received vs. respondents logged on
running average number of respondents per question
running average response time for all questions
running average network delay parameter
running total of absolute numbers of correct / incorrect answers
running ratio of correct / incorrect answers
running ranking of respondents with highest number of correct responses + fastest average time of correct responses
running average response times of different types of response correct / incorrect - types of votes
running ranking of most popular text strings from all responses
running average numbers of respondents submitting text string per question
running ranking of % of respondents submitting text strings per question
running ranking of most popular text strings from all question

### In-step messaging of participants

While the controller 1 is transferring processed results to the studio 2 for systems management reference and on-air display, it can also communicate on a bi-directional basis with the respondents 15 in a live audience-participation event.

A very useful feature is the ability to send messages to all respondents 15 immediately after they have submitted a response. In the case of a quiz or game show, such messages keep contestants informed of whether the answer they just submitted was correct or not. As the controller 1 keeps tally of all scores, it is also possible to keep each contestant informed of their overall progress in a multi-question quiz by sending their individual cumulative total of correct answers so far, along with the result of the last question.

In addition, as the system continuously processes results, it is also possible to keep contestants updated with their overall ranking in a competition, as well as telling them how many other contestants are taking part, together with a rating telling them in which % of total participants their individual performance is ranked.

In time-critical formats, individual and average response times can be sent to each contestant, along with graphs showing their performance trends.

For practical reasons, the production team will only be able to feed back to the broadcast receivers 12 13 14 a very limited set of ranking information - i.e. top 10 rankings or so. Consequently, the feedback of processed results and rankings on a personalised basis to individuals and groups via their personal communications devices 18 greatly enriches the audience-participation experience.

### Datamining and prospective participant selection

A particular feature of the controller is the ability to interrogate and search the database 5 while the controller 1 is being used to manage an audience-participation event, such as a live broadcast programme or live stand-alone event.

For example, while conducting a political poll on-air, the director may wish to identify a sample cross-section of individuals in order to canvas their individual points of view on-air, either via on-air text messaging, or on-air phone conversation.

Referring once more to Fig. 16, while these votes are coming in, the production team could, simultaneously, search the current responses, and request a list of potential interviewees. The search criteria could include the latest data from the poll underway, sorting respondents 15 by the way they voted, here three choices are shown, and their geographical area assuming location based services are feasible. In addition, if any of the respondents 15 has taken part in previous stand-alone marketing activities which have been carried out by the production team, it would be possible to further narrow the searches according to age, sex, occupation, and any other parameter which has been gathered onto the database 5 through previous market surveys.

The same techniques may be applied to any number of entertainment-oriented audience-participation activities - either in-step with a broadcast, or stand-alone.

### Future development of audience participation formats & supporting software

It is clear from the above examples, that the uses to which the data can be put are many and varied. It is also clear that ideas for new audience-participation formats and events will depend on the features and capabilities offered by the software running on the Business Logic Module 6 of the Controller 1.

As the controller 1 is fundamentally a computer system, it may be easily and flexibly programmed in response to the specific requirements of creative production teams involved in the development of new audience-participation formats & events.

### Stand-alone applications

When the controller 1 is being used in-step concurrently with a broadcast programme, a great deal of processing power is devoted to ensuring the required performance relating to the in-step processes described above. When the system is not in-step running concurrently with a broadcast programme a great deal of data and processing power is available to the production team for other uses.

The production team may use the respondents' database 5 to send messages of any description to any respondent 15 or group of respondents on the database 5.

Independent market surveys can be initiated from the controller 1, and when the marketing data collected as a result is added to the basic data already stored on the database, the controller 1 is transformed into a powerful marketing tool.

A wide variety of marketing spin-offs may be created, including but not limited to wild cards, bonuses, introductory offers, sponsored interactive events, promotional messages, electronic discounts & coupons and any other inducements to participate in either in-step or stand-alone interactive entertainment, marketing or gambling activities. All of these off-air activities can be linked back into any current or future in-step productions.

### PROGRAMME PRODUCTION INTERFACE 7

The programme production interface 7 is a computer processor with appropriate interfacing hardware and software which is usually located in the production studio 2. It is the means by which information is transferred between the business logic module 6 and the production studio 2.

Bi-directional connections 23 24 are represented as logical connections in Fig. 11. They may be any appropriate standard computer connection such as RS 232, SCSI, Ethernet, etc.... These connections are the means by which data is passed between the programme production interface 7 and the business logic module 6.

The programme production interface 7 is provided with appropriate processing facilities to transfer data from the business logic module via connection 24, and transform this data into the appropriate format for any or all of the target devices connected to 25A 25B 25C; and also to transfer data from the systems management computer via connection 26, and transform this data into the appropriate format for transfer to the business logic module 6 via connection 23

Link 25A is the API connection. The interfacing specification of this connection, and the data protocols transmitted on it are preferably decided by the API specification of the target API device 8.2 to which it is connected.

Link 25B is the broadcast-ready connection. The interfacing specification of this connection, and the electronic signals transmitted on it are preferably decided by the connection specification of the target broadcast control console 8.6 to which it is connected.

Links 25C and 26 are the bi-directional connections between the systems management computer 8.1 and the programme production interface 7. These are represented as logical connections in Fig. 11 above. The interfacing of these connections and the data protocols transmitted on them are preferably decided by the interfacing specifications of the target systems management computer 8.1. The systems management computer 8.1 is typically a general purpose computer, for example, a PC or a MAC. Therefore, the connections 25C 26 may be implemented as per a variety of standard computer interface specifications, such as RS232, SCSI and/or Ethernet.

### Key Logical Processes & Transactions

Fig. 11 describes one possible MI-based implementation of key logical interactions between the clients devices 18 and the server [clients I/O module 4]. It helps explains how the level-playing-field and in-step features may be implemented. Many alternative implementations are possible.

Reference is now made to Fig. 17, which is a chart illustrating the flow of communications between the client and the server and showing how these flow events are intended to synchronize with events at the broadcast receiver.

### Log-on - Initiation

In context with MI protocols, in the preferred embodiment of the controller 1, question page #1 is made available to requesting clients 18 in-step with invitation #1. Invitation #1 instructs the audience 15 how to operate the client 18 in order to dialup / log on and request transfer of question page #1 onto the client 18. A prospective respondent 15 follows the instructions and logs on. Question page #1 is consequently transferred from the server 4 onto the client 18. The respondent 15 operates the personal communications device / client 18 in order to complete response #1, and then executes the appropriate send command. Response #1 is then sent off to the server 4. In response to instructions embedded within question page #1, the client 18 embeds within response #1 a further request from the client 18 to the server 4 for transfer of the next question page - #2 - from the server 4 to the client 18 In context with MI technology and protocols, these instruction-embedding techniques are repeated continuously, in order to ensure that the clients 18 request continual transfers of subsequent pages from the server 4 without any further operational intervention by respondents 15. In a preferred embodiment, question page #1 is simply an SMS which is sent automatically in response to the user dialing a given number. Embedded within is a URL which the user may select in order to make further requests as per response #1.

The first question page is usually a welcome page, and calculating the respondents' response times is not usually critical at this stage. However, from question page #2 onwards, logical interactions may be time-critical depending on the format of the audience-participation event. Examples of time-critical formats are quizzes and games which measure the speed of eye-to-hand co-ordination and the intellectual dexterity of contestants.

### Measuring response times

In one possible implementation of software, respondents' 15 time-performance is measured by comparing the time that a particular question page is made available to clients which, in this case, is the same time for all clients to the time that each response to that page is received back from each client. This measurement is called the overall response time, and is logged by the server 4 with respect to each question / response transaction from each client 18.

A difficulty with this approach is caused by the latency which may be experienced on the public communications networks 3. Different networks provided by different operators may introduce different time delays in different parts of the network. For time-critical formats, this problem is solved as follows.

### Level-playing-field - optimising network performance

The example implementation described in Fig. 11 is only one possible software implementation. Many others are equally possible. In this example, each response message submitted by the client has a request embedded in it requesting the next question page.

Thus, when the server 4 receives response #4, instead of sending question page #5 as requested by the message embedded in response #4, it may invoke a response redirect feature, which instructs the client 18 to request the results page which may tell the respondent if their response is correct or not. One way of implementing the page redirect is to use the http feature 302 - object move, although the skilled person will be aware that there are other methods available both within and beyond the protocol. The time of dispatch of each individual response redirect message is logged, and when this message gets to the client 18, the client 18 requests the results page from the server 4, as instructed.

When the server 4 receives back from each client 18 the redirected request for the results page, it logs the time of receipt. By comparing the time of dispatch of the original response redirect message with the time of receipt of the return message, the round-trip time between the server 4 and each individual client 18 can be calculated. From the data related to this round-trip time a network delay parameter can be estimated.

The resulting network delay parameter is subtracted from the overall response time, and a more accurate actual-performance time is calculated for each question / response transaction sequence - net of any delays experienced in the public communications networks 3. This approach creates a more level-playing-field for those taking part in time-critical audience-participation events.

The above method of calculating actual-performance time is valid in context with those applications which make the next question page available simultaneously to all clients. An example of this type of implementation is described below in-step logic. However, some audience-participation events may require that different clients get availability to different question pages at different times. In such cases, it may be necessary to measure the respondent's response time in different ways as will be described below. In other applications it may be necessary to estimate the client / server return time only. For appropriate applications, this might be done by taking the overall round-trip network delay parameter and dividing by two, or by implementing alternative techniques to measure the outbound and return time delays separately.

Time proving routines like those described above may be sent and measured each time a respondent 15 sends a response. Consequently, the system can be programmed to constantly monitor network performance 3, and update each respondent's 15 network delay parameter on a continuous basis.

### In-step logic - keeping invitations in-step with matching question pages

After an invitation is broadcast and a matching question page is transferred to requesting clients 18, the production staff will allocate a period of time for the audience 15 to respond. This period of time is not predictable, and the way it is dealt with will vary from one programme format to another. Some formats will be quick-fire, in which case, stragglers will be ignored; whereas other formats will be more measured, perhaps involving a commentary from the studio, along with a presenter's analysis as the results come in, and are seen to develop graphically on the TV screens 12 13 14 over a period of time.

Some programme formats require that when the production team decides to broadcast the next invitation, and make the next matching question page available to requesting clients 18, both events happen in-step, so that there is no mis-timing between the information on the broadcast receivers 12 13 14 and the screens of the respondents' 15 personal communications devices 18. In order to keep broadcast invitations in step with questions made available to be transferred on client request, one possible implementation can be achieved as follows.

After a response is received, and the time-proving response redirect message has been sent out to the client 18, and returned to the server 4, the server 4 sends another message to the client, redirecting it to request a results page as described above. Apart from using the first round trip to estimate the network delay parameter, the results page has another important function.

The results page instructs successive requesting clients 18 to make further repeated requests of the results page after defined periods of time. This has the effect of putting each client into a holding pattern, so that as successive clients 18 submit completed responses, they can effectively be kept on hold until the next question page is available to be transferred. In the first phase of holding, each device is sent a constant holding delay, which has the effect of rotating all requesting clients 18 in a permanent hold state.

The second phase of holding happens once the production team has decided to move on to the next invitation / question. To do this, they select an in-step countdown via the systems management computer 8.1 of Fig. 12. This countdown can be any time period appropriate to current production requirements. The countdown is transferred to the systems management computer 8.1, so that the production team can use this information for visual and / or automatic cueing purposes in the production studio 2.

As the countdown decrements, repeatedly requesting clients 18 are no longer given the constant holding delay of phase 1. Instead, the period of time that elapses between the time that each client 18 requests the results page during holding phase 2, and the time that the countdown reaches zero is calculated, and the client 18 is instructed to make a further page redirect after the calculated period of time and request the next question page from its proper location.

The effect of holding phase 2 is that as successive clients 18 request the results page, they are all redirected and targeted to request the next question page from the correct location when the countdown reaches zero. Consequently, the studio is cued, and the next invitation is switched or mixed on-air at the same instant that the next question becomes available to requesting clients 18.

Holding phase 1 time constants and holding phase 2 countdowns may be tailored by the systems management computer 8.1 to specific programme requirements.

### Network bottlenecks - spreading the load

Reference is now made to Fig. 18, which is a simplified diagram further illustrating message flow between the client and the server in tandem with events on the broadcast receiver, and in particular illustrating load traffic spreading techniques as discussed in the following.

Some nodes in the public communications networks 3 may be constrained in capacity, and therefore in maximum data throughput. At the present time, this constraint applies particularly to personal communications gateways 20. It is noted that in the preferred implementation, personal communications gateways are provided as mobile internet MI gateways. These constraints can cause major problems when an invitation has just been broadcast, as there are likely to be huge bursts of data over short periods of time from the audience's personal communications devices 18 in response.

A preferred solution to this problem is to implement a response time-spreading technique which involves an application level method of measuring the actual performance times of respondents.

By using the personal communications gateway routing information received with each response, the network optimisation routines know how many respondents 15 are logged on to each personal communications gateway 20. The production staff can monitor the level of data coming from various gateways 20 via the systems management computer 8.1. Should they consider that certain gateways 20 are overloaded, the following logic may be applied on a gateway by gateway basis.

When the server 4 transfers each successive question page out to each requesting client 18, embedded in each message is an individual response timeout parameter for each personal communications device 18. These messages instruct each individual personal communications device 18 to wait for a defined period, a response timeout delay before sending back the completed response.

By staggering the time periods of the response timeout delays, and sending different sets of parameters to different sets of devices 18 over an appropriate range of times, the responses do not all happen in a simultaneous burst, but are spread in a much more manageable time-sequence, allowing a personal communications gateway 20 of limited capacity to deal with much more response data than if it all arrived in time with the actual responses made by respondents 18.

In implementing these delays, further complications are created with respect to calculating actual response times as described above. Therefore, in the cases of clients 18 which are being instructed to implement data load-spreading response timeout delays, an alternative method of calculating actual response times is implemented as follows.

Each server message containing a response timeout parameter also instructs the client 18 to log the time-period between the time that a question page is displayed onto the screen of the personal communications device 18 and the time that the respondent 15 operates the command to send the response back to the server 4. The personal communications device 18 does not send the response back immediately, but rather waits until the response timeout delay has expired. However, because the respondent's actual response time has already been logged in the personal communications device 18, the respondent's actual response time is returned to the server along with the response message when it is eventually sent. In this way, accurate performances can be measured and logged by the system, despite the fact that deliberate delays have been introduced into the system through the implementation of data load-spreading techniques.

It is preferred that these processes are invisible to respondents 15. In order to maintain respondent confidence, the instant that the respondent 15 clicks the "stend" command, a message on the screen of the personal communications device 18 immediately acknowledges that the response has been sent. This screen message is pre-programmed for local execution within the personal communications device 18, and is not dependent on communication with the server 4.

It is also preferred that data load-spreading features are not abused by hackers. Therefore, the timing mechanism or specific aspects thereof are encrypted. One method of encrypting is to represent each time increment of the response timeout parameter embedded in the message as a long string, which is different from one question to another and from one personal communications device 18 to another.

A variety of load-spreading parameters may be programmed and implemented on the controller 1, depending on the actual degree of bottlenecks experienced in the networks 3, and the performance constraints of each particular audience-participation event.

The above descriptions are only sample implementations of some of the key logical processes and transactions of the controller 1. As the controller 1 is fundamentally a computer system, many other approaches are possible, and will be necessary, depending on the capabilities and constraints of target personal communications devices 18, and public communications networks 3; as well as the creative requirements of individual audience-participation formats.

### AUDIENCE PARTICIPATION CONTROLLER

### Refinements of in step feature

The in step feature as referred to above enables the production team to transfer a succession of question pages to all participating personal communications devices / clients 18 in step or in synch with the matching broadcast invitations without any further operational intervention 17 by the respondents 15. As described in the previous documentation, the successful operation of the Audience Participation Controller 1 does not require that the master clock of the Audience Participation Controller be synchronised with the master clock of any other equipment external to the Audience Participation Controller - including the broadcast transmitter 10 or any other equipment in the broadcast distribution centre 10 or the programme production studio 2.

The benefit of this asynchronous approach is that production staff are given as much flexibility as possible regarding the running order of a live broadcast. Production decisions regarding exactly when the broadcast team should move the audience's attention from one topic / question page to another may be managed spontaneously on-air, without the need for a pre-ordained timing schedule to be agreed or programmed before the programme goes on-air, or to be continuously referred to a real-time or prerecorded clock or time-code of any kind.

However, in order to achieve this flexibility in production, the overhead in data transactions between all the participating personal communications devices / clients 18 and the clients I/O module / server 4 passing through the personal communications gateways 20 may generate large amounts of data traffic, in direct proportion to the number of participating clients 18.

In order to provide production staff with an optional means of reducing the relatively large bursts of data which may be generated by very large audiences, an optional block-transaction feature has been added to the system. This block-transaction feature trades off some of the benefits of production spontaneity and flexibility relating to the in step feature described hereinabove in order to significantly reduce the amount of data traffic flowing between the clients 18 the clients I/O module 4 and through the personal communications gateways 20.

### Block-transaction Feature

Reference is now made to Fig. 19, which is a simplified diagram illustrating time-based correspondence between questions being broadcast and displays being shown on the user's mobile telephone.

After each participant 15 has logged on to the interactive system as described hereinabove, the server 4 transfers a block of data back to each personal communications device 18 containing a pre-programmed sequence of question pages. The maximum number of question pages contained within the block is limited by the storage capacity available within each personal communications device 18, and the size of each question page. In some current applications, such question blocks can comfortably contain 15 or so question pages.

Respondents 15 will not be aware that an entire question block has been transferred onto their personal communications device 18, but after the question block has been successfully transferred, the server may instruct each client 18 to display an appropriate message such as "please wait for broadcast cue to start".

The data in the question block also has instructions embedded in it, which tell the client 18 when and how to display the sequence of questions which is now stored on the client 18.

For example, the production team may have decided in advance that there will be a 10 second gap between the transmission of each question within a particular pre-planned segment of the programme to be broadcast. In this case, in order to display the corresponding questions on the client 18 in step with the questions to be broadcast, the data within the question block not only contains all the questions for that segment in the correct order, but also contains a set of embedded switching and timing instructions for the client 18.

Some of these instructions command the client 18 to wait for a trigger signal before starting a display sequence. Other instructions command the client 18 to insert, in the case of this example, a 10 second interval between the switching of the display from one question to the next, in order to keep the sequence of questions displayed on the client 18 in step with the corresponding sequence of questions to be broadcast, one every 10 seconds.

In order to start both the broadcast sequence and the client 18 sequence in step, respondents 15 are instructed via the broadcast to wait for a countdown. Respondents 15 are further instructed to press a particular button on their personal communications devices 18 at the end of the countdown. When these buttons are pressed, the clients 18 internally generate the trigger signals which initiate the display of the block of questions in the timed sequence pre-programmed within the question block. As the production team uses the same countdown to initiate the transmission of the corresponding sequence of questions on-air, then both sets of questions are consequently switched in step.

With reference to Fig. 19, when the first question page is displayed, the respondent 15 responds by entering the answer via the keypad of the mobile communications device 18. However, this answer is not returned immediately to the server 4. Instead, provided that the response is made before the display switches to the next question, then, for the time being, this answer is stored locally, on the client 18. In order to maintain effective dialogue, when the respondent 15 enters an answer, the client 18 may be instructed to acknowledge via the display that an answer has been accepted.

After the appropriate time-interval pre-programmed by the instructions embedded in the question block, the client 18 will display the next question, and the respondent 15 will enter a response to the next question, and successive questions, in the same way.

This process is repeated in relation to each question contained in the question block, until the last question is reached.

When the appropriate time interval for answering the last question has expired, the client 18 ceases to accept any further responses from the respondent 15.

The client 18 then interprets instructions embedded within the question block telling it to wait for a further specified period of time for implementation of the Data Spreading feature - see later and when this further data-spreading period is timed out, to send the answers corresponding to the original question block, back to the server 4.

### Benefits & Trade-Offs of Block Transactions

Hereinabove has been described one way of keeping content displayed on the clients 18 in step with matching content broadcast on the receivers 12.

However, this particular implementation is structured in such a way that on answering each question, each client 18 is required to send a constant stream of "next question" requests to the server 4 which responds by sending a constant stream of "hold" instructions back to the clients 18 until the production team decide that the next question should be displayed on the clients 18 in step with the information broadcast on the receivers 12. In relation to mass-audiences, this implementation may generate very large and continuous amounts of data traffic across the public communications networks 3.

The following describes an alternative implementation in which the need for constant streams of "next question" requests from each client 18 and corresponding "hold" responses back from the server 4 is avoided. Data traffic is further reduced due to the fact that data transfers between the server 4 and each client 18 are restricted to a few transactions for each block of questions and answers, rather than for each individual question & answer.

The implementation involves sending a series of page displays in a group following a single request. The group of displays are downloaded once and then the local device displays them one by one as appropriate or using any timing rules that are provided. Such a group of displays can be implemented using the deck of cards feature of WAP.

The trade-off of this alternative implementation vs. the one described hereinabove is that there is some loss of freedom in the sequencing of questions on-air. In the above, the production team have complete freedom regarding the sequencing of questions on-air, and can formulate, create and re-order questions on-air, as quickly as the production equipment can be operated, on an ad-hoc basis. By contrast, in the following example, once the content, order and timing of a sequence has been decided, and the resulting question block has been transferred to clients 18, the production team is then committed to a fixed running order for that particular sequence, involving a particular set of questions in the particular order and timing in which each particular question block has been programmed.

Now, for many applications and formats, such a trade-off presents comparatively few production constraints while offering huge benefits related to controlling the consequent data overhead on the public networks 3 via the public communications gateways 20 and through the server 4.

### Data-Spreading Benefits of Block Transactions

Reference has been made above to techniques for optimising the performance of public communications networks 3 and gateways 20 with relation to traffic-loads and bottlenecks.

Similar techniques can also be applied to the block-transaction approach. Instructions embedded in the question blocks sent from the server 4 to the clients 18 can optionally include variable data-spreading time-delays to be invoked by the clients 18 after the time-period has elapsed during which the respondent 15 may respond to the last question, but before all the answers are sent back to the server 4.

When the server 4 sends out a question block to clients 18, it may vary the time delay parameter on an individual client basis. For example, when sending the question block to the first client 18, the server 4 might embed a 1 second time-delay to 5 be invoked by the client after the last answer has been entered by the respondent 15, but before the client 18 sends the completed question block back to the server 4. Then, when sending the question block to the second client 18, the time-delay may be incremented to 2 seconds, and with the third client, 3 seconds, and so on.... On reaching the 60^{th} client 18, the server may be programmed to restart the process at 1 second for the 61^{st} client, and so on...

In this example, the total data load returned to the server 4 from all clients 18 will be spread evenly over a 60 second period, consequently evening out peaks and overloads. Of course, different time-delay parameters may be programmed according to different circumstances and requirements.

### GPRS "Keep Alive" Feature

Some GPRS mobile communications devices 18 are programmed to disconnect from the public communications network 3 should they remain idle for more than a few minutes.

The block-transaction approach is designed to ensure that each participating mobile communications device 18 is kept as idle as possible during the period when a question block is being maintained in step with a broadcast. Consequently, there is a risk that some respondents 15 using GPRS devices 18 may lose their GPRS connection 4 during a broadcast.

In order to avoid this problem, the system 1 may be programmed to log the details of all GPRS participants on the database 5, and instruct them to request a tiny package from the server during a broadcast at an appropriate frequency designed to keep them "alive" on the network 3, and prevent them from disconnecting themselves. This method is designed with Traffic Spreading in mind, and therefore clients will request the "Keep_Alive" package at different times.

### Refinement of Call to Action feature - Encryption of User ID

Above reference has been made to the Call to Action feature. Initially, respondents 18 communicate with the server 4 by sending an MO Mobile Originated SMS. The server 4 logs each respondent's MSISDN caller's phone number - which is available to the controller 1 via the incoming SMS message on the database 5, and generates an internal *user_id* which will be stored against the MSISDN in cases where one does not already exist in the database.

After the respondents' phone numbers / internal User IDs, have been logged on the database 5, the server sends a WAP push message to the client with a URL link 18, and communication between server 4 and client 18 is continued thereafter using Mobile Internet protocols.

In order to maintain the confidentiality of respondents' 15 phone numbers, the controller 1 creates and cross-refers on the database 5 an encrypted User ID for each respondent 15, and uses these encrypted User IDs embedded in the URL string, instead of the respondents' actual phone numbers, in all Mobile Internet communications between the server 4 and the clients 18.

A further preferred embodiment of the controller 1 implemented using MI Mobile Internet and Wireless Application Protocol WAP technologies is now described. The present embodiment relates particularly to the following topics:
**Registration Process**
**Latency Estimation refinements**
**In-Step and Level Playing Field refinements**
**Traffic Spreading refinements**
**Transcoding**
**Keep Alive**

### Log On / Registration Process

Reference is now made to Fig. 20, which is a simplified diagram illustrating a three-stage log-on or registration process.

An initial broadcast invitation instructs prospective respondents 15 how to use their personal communications devices / mobile handset / client 18 to log-on / register on the controller 1. In the preferred embodiment of the controller 1, this initial broadcast invitation invites respondents 15 to register on the controller 1 using a standard SMS short message service short code. This SMS mobile originated MO message is delivered to the controller 1. The controller 1 stores the user's MSISDN mobile phone number - available to the controller 1 within the MO message, generates a unique user ID for each user within the database 5 and responds by sending back to each mobile handset / client 18 an SMS mobile terminated MT message in the form of a WAP PUSH. WAP Push is a binary SMS message and includes a Mobile Internet link to the controller 1. The WAP PUSH contains a URL with an encrypted user ID - unique to each mobile handset 18 - embedded in the URL string.

The WAP PUSH, when activated by the respondent 15, automatically launches the WAP browser on the mobile handset 18 and connects it to the controller 1 using Mobile Internet technology typically via GPRS. When the URL is requested by the mobile handset 18, the controller 1 extracts each mobile handset's 18 unique user ID from the encrypted version contained in the URL to identify the mobile handset 18. The controller 1 then decides whether the user is allowed to log on to the application and decides what page to serve back.

### Benefits of Log On / Registration Process

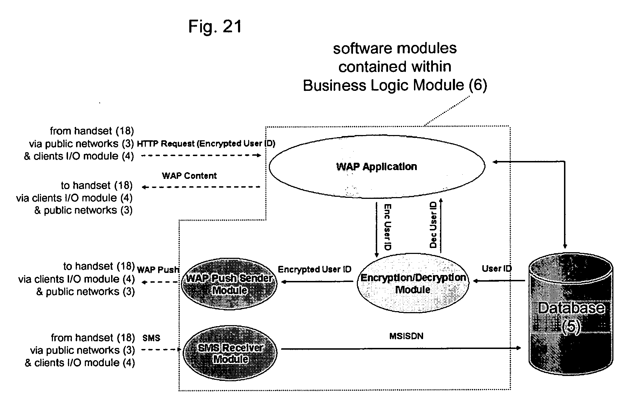

The MSISDN mobile phone number is the only means by which the controller 1 can identify individual mobile handsets 18 and communicate on an individual basis with individual respondents 15. SMS is a relatively secure technology, whereas WAP is not. Therefore, for privacy and fraud-control reasons, the vast majority of mobile operators do not reveal the user's MSISDN on the HTTP requests. By implementing the log on / registration process in the above manner, the controller 1 captures the respondent's 15 mobile phone number via a secure technology SMS, and then, after protecting the confidentiality of respondents' phone numbers by using encryption techniques, communication is continued thereafter using Mobile Internet technology, which is less secure than SMS, but much more powerful in terms of graphical and presentational capabilities. Fig. 21 illustrates how the WAP application receives only the encrypted user ID and therefore the MSISDN is never transferred over an unsecure network, although it is transferred quite openly via SMS.

### Latency Calculations

Variable latencies can be introduced at each stage of the highly complex mobile networks see diagram below.

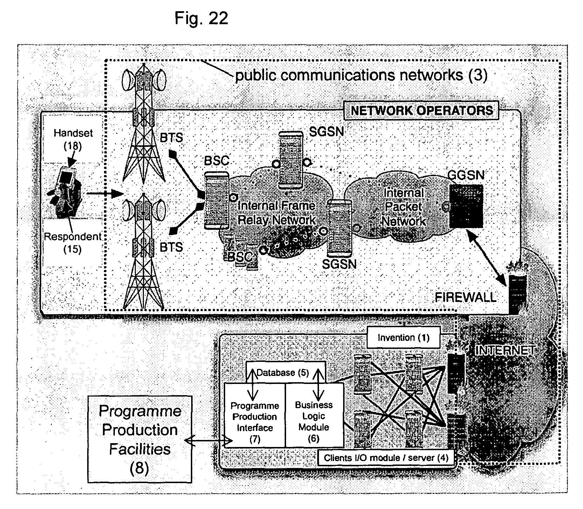

Reference is now made to Fig. 22 which is a simplified block diagram illustrating the communication path from the user's mobile device to the controller 1 according to a preferred embodiment of the present invention and also showing the relationship of the controller to the broadcast production facilities.

Communication from the handset to the controller is carried out via a base station and following features of a typical cellular network and then via firewalls and the Internet to the controller itself.

While there are a number internal protocols available within the GSM, TDMA and CDMA network topologies that could provide the controller 1 with an understanding of the mobile network latencies, these are not suitable for the large scale bursts of traffic created by deployments of the platform. For example, TALI and SS7 protocol data provides a vast array of information for time-stamping, routing and billing events within a mobile network. However, this represents only a small portion of the information required for the controller 1 to successfully deliver audience participation applications. Consequently, the controller 1 has been refined in order to better estimate the variable latencies that exist for each mobile user at any given point in time.

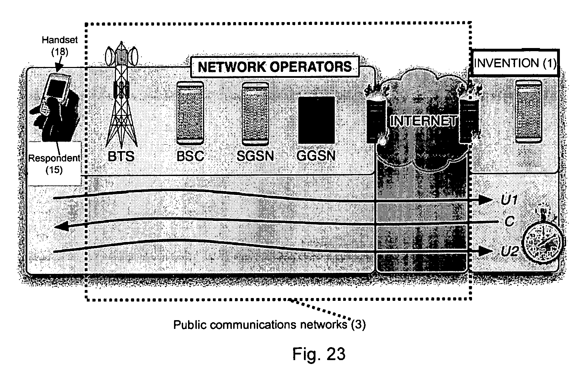

Reference is now made to Fig. 23 which is a block diagram showing the path in Fig. 22 between the user and the controller and in respect of which latency estimation will now be explained. The latency estimation process involves the following key steps:
**STEP1 -** A respondent 15 operates the handset 18 in order to send a valid User ID - as generated in the registration process - to the controller 1, requesting a URL *U*₁.
**STEP2 -** The User ID is logged and the preferred implementation of the controller 1 as described in this document issues an HTTP code 302 WAP PUSH message redirecting the handset 18 to a new URL. The controller 1 logs the *time - **t1** -* at which the WAP PUSH message is sent.
**STEP3** - The handset 18 responds to the WAP PUSH message by sending an appropriate WAP return message back to the controller 1, requesting the new URL *U*₂. The controller 1 logs the time that the return message is received - ***t2** -* and stores the roundtrip time as ***rt*** = ***t2** - **t1*** against the appropriate respondent's 15 User ID.
**STEP4** - The controller 1 estimates the end-to-end latency experienced by each handset 18 by using not only each handset's own ***rt**,* but also in conjunction with the average latency for each specific handset model - data which is stored in the database 5. This handset data is profiled and used dynamically in business logic module 6, together with the average latency for the public communications gateways 20 embedded in the public communications networks 3 - data which is also stored in the database 5.

Taking all of these parameters into account, individual latency measurements are continually sampled, averaged, and stored against each user in the database 5.

### Other factors included in Latency Estimation

The individual latency parameters determined by the latency estimation process allows the compilation and transfer to requesting mobile phones / clients 18 of blocks of questions with card timers code embedded within the question blocks which instructs the mobile phone / client 18 when to switch from one question / card to the next. These latency parameters are adjusted on a user-by-user basis to reflect the different end-to-end latency values experienced by individual mobile phones / clients 18. Individual latency values are continuously updated per mobile phone or User ID to ensure minimal drift from the average value.

Other key points to note relating to estimates of latency are as follows: 5

The latency of each mobile handset 18 at any given time depends on various parameters such as the cell BTS, the base station controller BSC, how busy the SGSN is with higher-prioritized traffic and how busy the GGSN WAP gateway 20 is. Outside of the mobile operator network, the level of activity on the operator's internet connection and the load on the client I/O modules / servers 4 of the controller all form part of the model. Therefore, the task of predicting an absolutely exact latency for each individual user is highly problematic. However, through frequent sampling of individual end-to-end latency performance using data gathered by the measurement techniques described above, together with the known latency performance data relating to the different types of mobile phones 18 and network gateway 20 stored for reference on the database 5 of the controller 1, reasonable deductions and inferences regarding end-to-end latency may be made in order to construct algorithms which arrive at the most accurate estimation possible.

In the preferred embodiment described in this document, the controller 1 uses algorithms to reach the most accurate estimation possible of each mobile handset's latency in real-time e.g. using the HTTP redirect code 302

Latency profiles experienced by individual handsets 18 are continually improved by measuring end-to-end latency after each event, and by building dynamic profiles of measurements based on time of day, and network loading factors.

Latency estimations take into account any latency caused by specific characteristics of mobile handset 18; these include but are not exclusive to processor speed and firmware version.

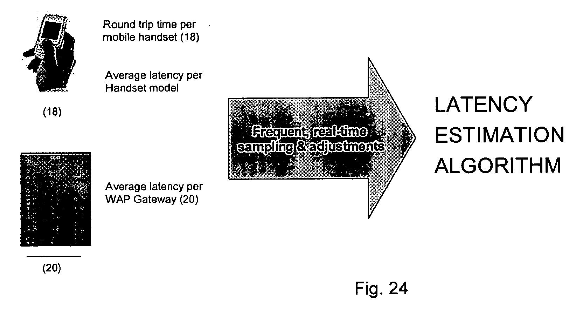

Fig. 24 illustrates the key components in the latency measurement, although it should be borne in mind that the latency estimation explained above allows other factors to be measured as well, as long as they affect the latency in practice.

### In-Step and Level Playing Field

The In-Step feature as described above is used to deliver content to respondent's 15 mobile phones 18 at the same time that matching content is broadcast. To do this in one preferred embodiment for each individual respondent 15, In-Step:
ensures that every data packet sent from the controller 1 to each mobile 18 contains relative timer values to instruct the mobile 18 to display content on the screen at specific and exact times
uses the latency capabilities as described hereinabove.

The controller 1 also uses the latency capabilities in order to measure the true *'time_to_answer'* for answers submitted by each respondent 15. Thus a respondent 15 connected to the controller 1 via a slow handset 18 on a slow network 3 is not disadvantaged relative to another respondent 15 connected to the controller 1 using a fast handset 18 on a fast network 3. Instead the highly desirable **Level Playing Field** is created.

### In-Step and Level Playing Field Process Flow

The diagram below provides an additional overview of the process flow for the implementation of In-Step and Level Playing Field please refer below for a commentary. A Quiz game broadcasted on TV has been used to illustrate the process:

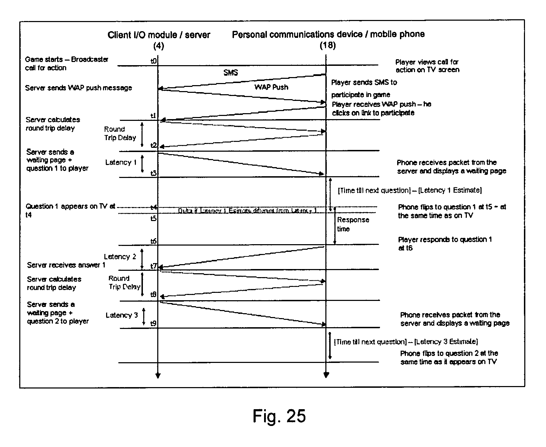

Reference is now made to Fig. 25 which shows interactions between the server and the mobile device and illustrates the above-described embodiment for achieving a level playing field.

A game starts at ***t0.*** The broadcaster calls the audience to action by asking them to send an SMS message to a specific short code number

Users 15 respond to this call to action by sending the SMS message as requested.

The client I/O module / server 4 of the controller 1 receives this SMS and responds by sending a WAP PUSH back to the user 15 including the encrypted User ID as described above.

The user 15 receives the WAP PUSH and clicks on the link to participate. This generates an HTTP request from the mobile phone 18 to the controller 1.

The server 4 receives this HTTP request at timestamp ***t1** -* this time stamp is stored against that mobile phone's 18 User ID.

The server 4 then sends a message to the mobile phone 18 that gets automatically sent back to the server 4 due to special code embedded in the message by the controller 1. The server 4 time stamps the time at which this message arrives back at the server 4 - ***t2**.* The round trip delay is ***t1*** subtracted from ***t2.***

Immediately at ***t2***, the server 4 sends the first piece of content, for example Question 1, to the mobile phone 18. This arrives at the mobile phone 18 at ***t3**.* Most of this content, for example Question 1, does not appear on the mobile phone 18 until ***t5**.* This is because the controller 1 plants a timer within the content at ***t3*** - the value of this timer depends on the value 'Latency 1', which is the controller's estimate of the latency value - as previously described.

The respondent 15 responds to the first question at ***t6**.* The *'time_to_answer'* for each respondent 15 is calculated from the difference between ***t4**,* the time at which the question first appeared on the TV broadcast, and ***t6***.

At ***t6*** when the respondent 15 submits an answer, the mobile phone 18 sends an HTTP request to the server 4. This request arrives at ***t7**.*

The controller 1 performs another latency measurement by triggering another message to the mobile phone 18 that gets automatically sent back to the server 4 - this arrives back at the server 4 at ***t8,*** and an improved latency value is estimated through averaging.

At ***t8,*** the controller 1 repeats the process from ***t2.*** This process is continued until the end of the broadcast or advertising event.

### In step and WAP

In-Step works in the case of WAP applications by compiling a WML deck of cards *block transaction* as described above. The cards include embedded timers, including individually estimated latency parameters, set on a per mobile phone 18 basis. Each respondent's 15 mobile 18 is profiled and a unique set of timers is applied to the trans-coded template that is sent back to them as explained above.

### Traffic Spreading

As described hereinabove, the controller 1 is capable of implementing application-specific, time-based traffic spreading. Using this feature, in combination with latency estimations and the In-Step feature, reduces the traffic spikes in mobile network 3 loads that could be caused by large scale broadcasting or advertising events.

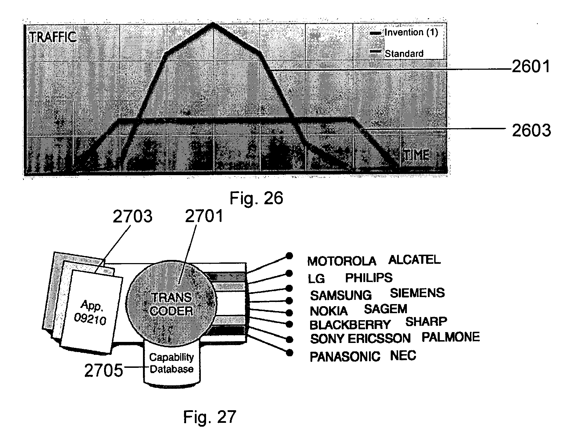

Referring now to Fig. 26 and upper line 2601 illustrates the network traffic without spreading following a stimulus on the television at a given time without traffice spreading. Line 2603 illustrates in idealized fashion the traffic load with spreading according to the present embodiments.

True traffic spreading needs to be application sensitive rather than just data-type sensitive. Delaying certain traffic or re-distributing traffic as a means of mitigating a peak load can break many time based applications. The controller 1 includes a Traffic Spreading feature as follows: 10
**Initial Spread** - Any Call-to-Action messages generated by the controller 1 which may bring a mass of respondents 15 mobile phones 18 across the communications gateways 20 GGSN to the controller 1 are spread out in time, reducing any flash effect. As the initial SMS messages are received by the server 4 in response to either individual Call to Action SMS messages generated by the controller 1 or a broadcast invitation to respondents 15 to SMS the controller 1, the server's 4 WAP PUSH responses to these messages is metered and spread to maintain a more even threshold of activity. Adequate time is engineered into the controller with regard to applications in order successfully accommodate large-scale audience participation.
**Time Slots -** The controller 1 embeds a range of timing parameters into messages sent to mobile phones 18 to ensure that any return requests sent back to the server 4 from these mobile phones 18 as a result, are received back over a pre-planned time period. This spreading is achieved by dividing the pre-planned time period into a series of time slots over which the requests will be spread. The allocation of time slots is application dependent. Time slot profiles are generated dynamically during the application creation process. As requests from mobile phones 18 are received by the server 4, usually in response to WAP PUSH messages, the relevant mobile profiles and latencies are evaluated and individual mobiles 18 are then assigned specific timeslots. The mobile 18 profile evaluation is important as some slower mobiles 18 will require earlier time slots. The latency evaluation is important to ensure that each individual mobile 18 request arrives at the server 4 at its exact time slot.
**Automating mobile phone 18 requests** - The controller 1 automates requests from mobile phones 18 by instructing individual mobiles 18 to automatically request certain pages at certain times and by limiting respondents' options for generating manual requests.
**Caching** - The controller 1 caches content and application instructions within the mobile phones 18 in the time leading up to each participation event. The content is then fetched from the cache within each mobile 18 thereby avoiding the need to communicate with the server 4. For example, a quiz show could require all mobiles 18 to display question 1 at exactly 10:00:00. The controller 1 will ensure that requests for question 1 will be received back from all mobiles 18 in a time-spread from 09:58:00 to 10:00:00 and that question 1 will be cached on all mobiles 18 in advance of 10:00:00. However, all mobiles 18 will be instructed to automatically display question 1 at 10:00:00 without communicating further with the server 4.

### Transcoding

Reference is now made to Fig. 27 which illustrates a transcoder 2701. The transcoder 2701 receives as input application 2703 and data from capability database 2705. Database 2705 contains information about individual mobile devices and their capabilities and allows the transcoder to produce versions of interactive pages which are suitable for the more and less capable mobile devices.

Transcoding is a common service when dealing with the mobile applications used in the preferred implementation of the controller 1 described in this document. There are, for example, many companies that have products to handle automatic transcoding of web pages to WML pages. The transcoding engine included in the controller 1 transcodes application code as opposed to static content.

The need for a special transcoding capability arises from the fact that the controller 1 requires specialised knowledge of third party systems. The specialized knowledge is incorporated in the database 2705 of the controller 1. The database 5 preferably incorporates a learning facility to allow it to learn from operational experience. It is regularly updated with new handset models and newly discovered mobile handset behavior.

The controller's 1 transcoding capabilities can adapt content applications based on a set of specific requirements necessary for the successful operation of In-Step broadcasting and advertising applications. For example, the engine can adapt WML decks to cater for differences in the time it takes each handset to move between cards in a deck or for the ability to display a certain object.

### Keep Alive

The 'Keep Alive' feature as described above preferably solves the issues relating to certain models of mobile device 18 which disconnect from GPRS after a few minutes of idle time. The controller 1 instructs each of the mobiles 18 to initiate a call to a short WMLScript function at regular time intervals. This causes the mobiles' 18 browser to request a tiny WMLScript file from the controller 1 and as a consequence keep the GPRS connection alive. Each call to this function transfers a random value as a parameter to force the roundtrip between mobile 18 and server 4 and ensure that the connection will be kept alive.

### Summary

The controller described hereinabove is preferably a device which enables a network of individual personal communications devices and public communications networks to be used as an interactive broadcasting system, and which enables producers of broadcast programmes designed for audience participation to elicit and gather responses from participating individuals in a manner perceived as "continuous, spontaneous, synchronous and instantaneous" by both the programme producer and the audience.

The device preferably enables producers of broadcast programmes to sequence and re-sequence, in a random manner, programme material and interactive pages designed to elicit and gather responses from participating individuals within the audience while the programme is being broadcast, and in a manner perceived as "continuous, spontaneous, synchronous and instantaneous" as described above.

The device may be programmed by producers of audience participation broadcast programmes so that responses received in the form of data embedded in the interactive pages returned to the device by participating individuals in the audience may be analysed and processed by the device in order to automatically produce results in any reasonable data-processing format; including but not limited to alphanumeric listings, numerical rankings and graphical representations of absolute totals and ratios relating to the results, sub-elements of results and aggregates of results received from audience participants, in a manner perceived as "continuous, spontaneous, synchronous and instantaneous" by the producer and the audience, as explained.

The device preferably enables the producer of an audience participation broadcast programme to elicit initial responses from participating individuals and as a consequence of initial results received, to make editorial and production decisions on how the remainder of the programme should be sequenced or re-sequenced. It is possible to feed back the consequent results to the audience - to achieve an optimum balance between automatic processing, monitoring and feeding back to the audience of the outcome of results already elicited and received from participants up to any particular point in time during the broadcast on the one hand - while on the other hand, retaining substantial control over the generation, sequencing and re-sequencing of the remaining material to be broadcast in order to elicit further audience participation. The remaining interactive pages may be broadcast in order to gather the consequent responses from participants in the audience. The overall outcome of these processes is enabled by the device resulting in unprecedented control over editorial processes relating to the production of audience participation programmes in a manner which is perceived as "continuous, spontaneous, synchronous and instantaneous" by the producer and the audience.

The device preferably protects the confidentiality of individual audience participants by encrypting each participant's phone number at the earliest opportunity in the process, and using the encrypted version thereafter.

The device preferably enables the producer of an audience participation broadcast programme to trade off some of the benefits relating to "spontaneity" in order to reduce the high data overhead required to provide these benefits. This may be achieved by providing flexible options to structure in blocks the broadcast of material designed to elicit audience participation and the matching interactive pages designed to gather responses from individual participants.

A preferred device uses all available data relating to the public communications networks to make the best possible estimate of the variations in actual time-delays caused by variations in the quality of each signal path within the public communication networks between the device and the personal communications device of each individual participant. The device preferably applies the resulting data to results actually received from individual participants in such a way that applications which are time-critical for example, success in a broadcast competition, need not depend on speed of individual response to questions which have been simultaneously broadcast to all participants. Rather delays across the system are taken into account when calculating results. The taking into consideration of such delays creates a level playing field with regard to time-critical applications for all audience participants, regardless of the quality of the signal path via which they are communicating on the public networks.

The device preferably uses traffic spreading to minimise the peaks of large data-bursts - which, in mass-audience response situations, might otherwise cause data overload on those elements of the public communications network which suffer throughput constraints and which might lead to the loss of audience participation response data. The traffic spreading staggers the timing of responses to be returned to the device from all participating personal communications devices, so that sharp peaks are avoided on the public communications networks by spreading the data load over an appropriate time period, while ensuring that the device keeps track of all response staggering information, and takes this information into account in the calculation of final results, thereby extracting the optimum performance from the available public communications networks while guaranteeing the integrity of the results.

The device preferably ensures that the personal communications devices belonging to all audience participants remain logged on during the broadcast by automatically sensing which personal communications devices are prone to log themselves off during relatively short periods of network inactivity, and by sending those devices appropriate refresh messages during quiet periods which ensure that they do not log themselves off during the audience-participation broadcast.

A preferred device may optionally be operated in tandem with a separate, one-way broadcast medium such as but not limited to a television broadcasting system in such a way as to keep the material broadcast via the one-way system the content of which will typically be designed to elicit responses from audience participants in-step with the matching interactive pages broadcast via the network of individual personal communications devices the content of which will be typically be designed to capture response data from individual participants and return this data to the device.

It is expected that during the life of this patent many relevant devices and systems will be developed and the scope of the terms herein, particularly of the terms interactive television, WAP, Cellular, mobile device, is intended to include all such new technologies *a priori.*

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims. All publications, patents, and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention.

## Claims

1. A method for connecting a user of a mobile unit of a cellular communication service to a server, the method comprising:
receiving a cellular connection to a telephone number associated with a server;
sending a Uniform Resource Locator (URL) to said mobile unit;
receiving a request including said URL from said user via said mobile unit; and
connecting said mobile unit to said server via said cellular communication service.

2. A method for connecting a user to a server according to claim 1, wherein said connection to a telephone number is one of a short message service (SMS) and a telephone call.

3. A method for connecting a user to a server according to claim 1, wherein said step of sending a URL comprises one of sending said URL via short messaging service (SMS), sending said URL via message service (WAP push) and sending said URL via iMod email message.

4. A method for connecting a user of a cellular communications mobile unit to a server according to claim 1 wherein at least a part of said URL is unique to said user.

5. A method for connecting a user of a mobile unit of a cellular communication service to a server according to claim 4 and additionally comprising:
identifying said user from said request by said server according to said unique URL.

6. A method for connecting a user of a mobile unit of a cellular communication service to a server according to claim 5 and additionally comprising:
encrypting at least said unique part of said URL at said server; and
decrypting said encrypted part of said URL at said server from said request.

7. A method for connecting a user of a mobile unit of a cellular communication service to a server according to claim 1, further comprising sending to said user over said connection from said server a group of interaction displays.

8. A method for connecting a user of a mobile unit of a cellular communication service to a server according to claim 1, further comprising sending said user a staggered response time over said connection thereby to achieve traffic spreading and avoid load on either of said server and the cellular communication network.

9. A method for connecting a user of a mobile unit of a cellular communication service to a server according to claim 1 wherein said steps of sending a URL, receiving a request and connecting said mobile unit, are performed via at least one of the Internet and WAP protocols.

10. A method of interaction between a user of a cellular mobile unit and a broadcast program, the method comprising:
sending a group of interaction displays to said mobile unit, wherein each of said interaction displays is assigned a time-of-display in accordance with which said respective interaction display is displayed to said user;
wherein said time-of-display is synchronized with at least one of said broadcast program and a response of said user.

11. The method of claim 10, wherein said time-of-display is synchronized with both of said broadcast program and a response of said user.

12. A method of interaction between a user of a cellular mobile unit and a broadcast program according to claim 10 wherein said group of interaction displays comprises a deck-of-cards method of the Wireless Application Protocol (WAP).

13. A method of interaction between a user of a cellular mobile unit and a broadcast program, the method comprising:
receiving a group of interaction displays at said mobile unit, each of said interaction displays having a time-of-display assigned thereto; and
displaying said interaction displays according to their respective times-of-display;
wherein said time-of-display is synchronized with at least one of said broadcast program and a response of said user.

14. A method of interaction between a user of a cellular mobile unit and a broadcast program according to claim 13 wherein said group of interaction displays comprises a deck-of-cards method of the Wireless Application Protocol (WAP).

15. A method of interaction between a user of a cellular mobile unit and a broadcast program according to claim 13 additionally comprising:
receiving said response from said user at said mobile unit; and
sending said response from said mobile unit to a server associated with said broadcast program.

16. A method of interaction between a user of a cellular mobile unit and a broadcast program according to claim 15 wherein said steps of receiving and sending are performed via at least one of Internet and Wireless Application Protocol (WAP).

17. A method for interacting with a plurality of users of a respective plurality of cellular communications mobile units, the method comprising:
assigning delay parameters to respective mobile units, said delay parameters defining a delay prior to transmitting a user-response to a server;
wherein values of said delay parameters are distributed over a time period to obtain a substantially constant rate of transmissions of responses from said plurality of mobile units.

18. A method for interacting with a plurality of users of a respective plurality of cellular communications mobile units according to claim 17 wherein said step of assigning each mobile unit a delay parameter comprises embedding said delay parameter within an interactive display.

19. A method according to claim 18, wherein said interactive displays are members of groups of interactive displays sent together.

20. A method for interacting with a plurality of users of a respective plurality of cellular communications mobile units according to claim 18 wherein the group of interactive displays is sent under the WAP protocol.

21. A method for interacting with a plurality of users of respective plurality of cellular communications mobile units according to claim 17, further comprising:
sending, from said server to a respective mobile unit, a first request for automatic response at a first time;
receiving, at said server, from said mobile unit, an automatic response to said first request at a second time;
measuring, at said server a round-trip-time between said first time and said second time; and
calculating, at said server, a time-of-response, from said second time and a respective delay parameter and further subtracting a predetermined part of said round-trip-time, thereby to arrive at a time of sending.

22. A method for interacting with a plurality of users of a respective plurality of cellular communications mobile units according to claim 20 and additionally comprising:
calculating for each user an average time of response, and
grading respective users according to their average time of response.

23. A method for interacting with a user of a cellular communications mobile unit, the method comprising:
receiving, at a server, from said mobile unit, a user-response sent at a time of response;
measuring a time-of-reception of said user-response;
sending, from said server to said mobile unit, a first request at a first time;
receiving, at said server, from said mobile unit, an automatic response to said first request at a second time;
measuring, at said server a round-trip-time between said first time and said second time; and
calculating said time-of-response by subtracting half of said round-trip-time from said second time.

24. A method for interacting with a user of a cellular communications mobile units according to claim 23 wherein said first request uses an HTTP code for eliciting an automatic response.

25. A method for interacting with a user of a cellular communications mobile units according to claim 24 wherein said first request uses HTTP Status Code 302.

26. A method for retaining a communication channel with a mobile telephony device, comprising:
sending to the mobile device at least one interaction display;
embedding a request having a predetermined delay within said interaction display;
at expiry of said predetermined delay sending said request to a server, thereby to retain said communication channel.

27. The method of claim 26, wherein said request is a request for a WML script (WMLS) and said interaction display is a WML page.

28. The method of claim 27, wherein said predetermined delay is selected to be less than a session disconnection time-out.

29. A server for connecting a user of a cellular communications mobile unit thereto via a cellular network, the server comprising:
a call identifier operative to receiving a call from said mobile unit to a telephone number; and
a URL transmitter, operative to send a Uniform Resource Locator (URL) to said mobile unit, said URL being associated with predetermined content, thereby enabling said user to select said URL and to connect to said content.

30. A user connection server according to claim 29 wherein said call identifier is operative to receive at least one of a short message service (SMS) message and a telephone call.

31. A user connection server according to claim 29 wherein said URL transmitter is operative to send said URL via at least one of a short message service (SMS) message, message service (WAP push) and iMod email message.

32. A user connection server according to claim 29 further configured to inject into said URL an identifier to identify subsequent content requests as being associated with a given caller.

33. A user connection server according to claim 32 wherein said server is operative to encrypt said identifier.

34. A broadcasting interaction system for allowing interaction with a broadcast via a cellular device, the system comprising:
a content source for providing to requesting users a group of interaction displays, and
a synchronizer for providing each interaction display with a preconfigured time-of-display, wherein said time-of-display is for synchronization with said broadcast program.

35. A system according to claim 34, wherein said group is sent together to said cellular device as a deck of cards using the Wireless Application Protocol (WAP).

36. A system according to claim 34 comprising a sequence of groups of interaction displays.

37. A grading system for grading participants engaging in a multi-user interaction between users of cellular mobile units and a broadcast, said system comprising:
a calculator unit operative to calculate, for each said user, an average of a plurality of measurements of time-of-response of said user to said broadcasting program; and
a grading unit operative to compare respective averages of said time-of-response, therewith to grade said participants.

38. A synchronized content distribution apparatus for distributing content to a plurality of users in accordance with external time constraints, the content being within an application; the system comprising:
a content distributor of said application for receiving requests from users and distributing content in response thereto; and
a request spreading unit for sending to each user a respective delay parameter for use within said application, to define for each user a delay in sending a respective request, respective delays being varied, thereby to ensure that receipt of requests at said content distributor is staggered in time.

39. Apparatus for interactive broadcasting comprising:
an in step device for determining predetermined times in a broadcast relevant to user interaction;
a content insertion device for inserting interactivity content for sending over a network to users for interaction at said predetermined times;
and an embedding unit for embedding timing control into said interactive content to ensure that said interactive content is displayed to said users at said predetermined times.

40. Apparatus according to claim 39, wherein said content is configured for end users via at least one of the Internet, the PSTN and the cellular telephony network.
